# EUROPÄISCHE PATENTSCHRIFT

(11) **EP 3 464 409 B1**
(45) Veröffentlichungstag und Bekanntmachung des Hinweises auf die Patenterteilung: **19.02.2020**
(21) Anmeldenummer: 17723434.1
(22) Anmeldetag: 18.05.2017
(51) Int. Cl.: C08G 18/67, C08G 18/73, C08G 18/75, C08G 18/79, C08G 18/80, C09D 133/06, C08G 18/10, C08G 77/18, C08L 33/06

(54) **BESCHICHTUNGSMITTEL UND DARAUS HERGESTELLTE BESCHICHTUNGEN MIT VERBESSERTEN ANSCHMUTZUNGSRESISTENZEN UND (SELBST)REINIGUNGSEIGENSCHAFTEN SOWIE DEREN VERWENDUNG**
COATING AGENT AND COATINGS PRODUCED THEREFROM HAVING IMPROVED SOILING RESISTANCES AND (SELF) CLEANING PROPERTIES AND THEIR USE
MOYEN DE REVETEMENT ET REVETEMENTS AINSI FABRIQUES PRESENTANT DES RESISTANCES AMELIOREES ANTI-SALISSURES ET (AUTO)-NETTOYANTES ET SON UTILISATION

(30) Priorität: 24.05.2016 EP 16171080
(43) Veröffentlichungstag der Anmeldung: 10.04.2019
(73) Patentinhaber: BASF Coatings GmbH, 48165 Münster (DE)
(72) Erfinder: WEIHER, Christian, 48165 Münster (DE); AUSTRUP, Berthold, 48165 Münster (DE); JANSSEN, Andreas, 48165 Münster (DE)
(74) Vertreter: BASF IP Association
(86) Internationale Anmeldenummer: PCT/EP2017/062014
(87) Internationale Veröffentlichungsnummer: WO 2017/202692

(56) Entgegenhaltungen:
- US-A1- 2014 329 098

## Beschreibung

Die vorliegende Erfindung betrifft nichtwässrige Beschichtungsmittel enthaltend mindestens eine Hydroxylgruppen-haltige Verbindung, mindestens eine Isocyanatgruppen-haltige Verbindung mit freien oder blockierten Isocyanat- und Silangruppen, mindestens einen Katalysator für die Vernetzung der Silangruppen und mindestens ein alkoxysilylfunktionelles Siloxan.

### Stand der Technik

Aus der WO 08/74491, der WO 08/74490, der WO 08/74489, der WO09/077181 und der WO 10/149236 sind Beschichtungsmittel enthaltend Hydroxylgruppen-haltige Verbindungen (A) und Isocyanat- und Silangruppen enthaltende Verbindungen (B) bekannt, wobei (B) auf bekannten Isocyanaten, bevorzugt auf den Biuret-Dimeren und Isocyanurat-Trimeren von Diisocyanaten, insbesondere von Hexamethylendiisocyanat, basieren. Diese Beschichtungsmittel weisen gegenüber herkömmlichen Polyurethan-Beschichtungsmitteln den Vorteil einer deutlich verbesserten Kratzfestigkeit bei gleichzeitig guter Witterungsbeständigkeit auf. Die Schleifbarkeit und Polierbarkeit der aus diesen Beschichtungsmitteln resultierenden Beschichtungen wurde in der WO 2012/168014 und der WO 2012/059611 optimiert. Es finden sich allerdings keine Angaben und Aufgaben hinsichtlich Anschmutzungsresistenzen und/oder (Selbst)reinigungseigenschaften der aus den Beschichtungsmitteln resultierenden Beschichtungen, insbesondere nach Bewitterungsbelastung.

Aus der WO 07/033786 sind Beschichtungsmittel bekannt, die neben Phosphonsäurediestern und Diphosphonsäurediestern als Katalysator (A) silangruppenhaltige Gemische (B), wie beispielsweise die Mischung aus dem isocyanatgruppenfreien Umsetzungsprodukt (B1) von Hexamethylendiisocyanat-Isocyanurat mit N,N-Bis(3-trimethoxysilylpropan-1-yl)amin und dem isocyanatgruppenfreien Umsetzungsprodukt (B2) von Isophorondiisocyanat-Isocyanurat mit N-(3-Trimethoxysilylpropan-1-yl)-N-n-butylamin, sowie ggf. als weitere Zusatzstoffe (C) Polyacrylatharze oder andere Bindemittel und Vernetzungsmittel enthalten. Die aus diesen Beschichtungsmitteln hergestellten Beschichtungen weisen nach ihrer Härtung wiederum eine gute Kratzbeständigkeit bei gleichzeitig guter Beständigkeit gegen Chemikalien und Umwelteinflüsse auf, jedoch ist die Witterungsbeständigkeit verbesserungsbedürftig und die resultierenden Beschichtungen sind recht spröde. Angaben und Aufgaben hinsichtlich Anschmutzungsresistenzen und (Selbst)reinigungseigenschaften der resultierenden Beschichtungen werden nicht gemacht.

In der WO 2001/98393 werden 2 K-Beschichtungsmittel beschrieben, enthaltend ein Polyol als Bindemittelkomponente sowie als Vernetzerkomponente eine Mischung aus einem Polyisocyanat (A) und einem Silan-Oligomer (B), welches mindestens zwei Isocyanatgruppen und zusätzlich Alkoxysilangruppen, bevorzugt Bisalkoxysilangruppen, enthält und welches hergestellt wird durch Umsetzung eines Polyisocyanates (Pl) mit Alkoxysilylaminen, bevorzugt mit Bisalkoxysilylaminen, insbesondere mit Bis(3-propyltrimethoxysilyl)amin. Als Polyisocyanat (A) sowie als Polyisocyanat (Pl) zur Herstellung der Komponente (B) werden bevorzugt Hexamethylendiisocyanat und Isophorondiisocyanat sowie deren Biurete und Isocyanurate eingesetzt. Diese Beschichtungsmittel werden insbesondere als Primer eingesetzt und hinsichtlich der Haftung auf metallischen Untergründen, bevorzugt auf Aluminium-Untergründen, optimiert. Auch hier fehlt jeglicher Bezug auf Anschmutzungsresistenz und (Selbst)reinigungseigenschaften der resultierenden Beschichtungen.

Ferner sind wasserabweisende Beschichtungsmittel auf Basis von (Meth)acrylaten beispielsweise aus der EP 0348946 A1, der WO 99/26994, und der US 2012/0302693 bekannt. In diesen Beschichtungsmitteln werden fluorhaltige Additive oder fluorhaltige funktionelle Gruppen in ein Polymergerüst eingeführt, die zu wasserabweisenden Eigenschaften und verbesserten Schmutzanhaftungs- und/oder Reinigungseigenschaften führen. Es werden jedoch keine Beschichtungen mit verbesserten (Selbst)reinigungseigenschaften unter Erhalt eines guten Erscheinungsbildes offenbart, insbesondere nicht nach Bewitterungsbelastung. Siloxane werden, wenn überhaupt, nur in der Form eines Dimethylpolysiloxans als Verlaufsadditiv eingesetzt.

Aus der EP 1295914 sind Klarlacke bekannt, dessen Beschichtung verbesserte wasser- und ölabweisende Eigenschaften unter Beibehaltung einer Säureresistenz besitzen. Hierzu werden Klarlacke beschrieben, welche Hydroxyl- und Epoxylgruppenhaltige Acrylate, Polyesterharze mit einer hohen Säurezahl von 120 - 200 mg KOH/g, ein Acrylat enthaltend Alkoxysilylgruppen und ein Acrylatharz enthaltend Alkoxysilylgruppen und Dimethylpolysiloxan-Seitenketten enthalten, wobei die resultierende Beschichtung eine Tg zwischen 100 und 120°C besitzt. Nicht offenbart werden allerdings witterungsstabile Beschichtungen, die eine verringerte Anschmutzung und verbesserte (Selbst)reinigungseigenschaften besitzen.

In der US 9120916 B1 sind Beschichtungsmittel beschrieben, die zu einer verbesserten Anschmutzungsresistenz auf Substraten führen, in dem ein 2K-Beschichtungsmittel enthaltend Acrylate mit Hydroxyl- und Polydialkylsiloxan-gruppen sowie chemisch gebundene, mit ethylenisch ungesättigten Verbindungen funktionalisierte Si-Partikel, aufgebracht wird. In der US 9187670 B1 sind zusätzlich funktionelle Polydialkylsiloxangruppen in der Härterkomponente enthalten. Nicht offenbart werden allerdings Beschichtungen, die eine verbesserte Anschmutzungsresistenz und verbesserte (Selbst)reinigungseigenschaften auch nach Freibewitterung besitzen.

Aus der WO 2011/056555 A1 sind kratzfeste Beschichtungsmittel aus Komponenten mit Alkoxysilangruppen (A), Polysiloxanen enthaltend funktionelle Gruppen (B) und Komponenten (C), die reaktiv mit den funktionellen Gruppen von (B) sind, bekannt. Jedoch werden keine Anschmutzungsresistenzen bzw. (Selbst)reinigungseigenschaften der resultierenden Beschichtungen offenbart.

Die Verwendung von (fluorfreien) hochverzweigten Polyalkoxysiloxanen als Additiv in Beschichtungsmittel zur Ausgestaltung von verbesserten (Selbst)reinigungseigenschaften und verminderter Anschmutzungsneigung von Oberflächenbeschichtungen sind aus der WO 2014/187972 A1 bekannt. Allerdings werden darin keine witterungsbeständigen Beschichtungen offenbart.

### Aufgabe

Aufgabe der vorliegenden Erfindung war es daher, Beschichtungsmittel, insbesondere für die Automobilserienlackierung und die Automobilreparaturlackierung, zur Verfügung zu stellen, die zu Beschichtungen führen, die verbesserte Anschmutzungsresistenzen und (Selbst)reinigungseigenschaften aufweisen, insbesondere auch nach Bewitterungsbelastung.

Darüber hinaus sollten die Beschichtungsmittel die üblicherweise an die Klarlackschicht bei Automobilserienlackierungen und Autoreparaturlackierungen gestellten Anforderungen erfüllen.

### Lösung der Aufgabe

Im Lichte der obengenannten Aufgabenstellung wurden nichtwässrige Beschichtungsmittel gefunden, enthaltend:
(A) mindestens eine Hydroxylgruppen-haltige Verbindung (A) mit einer Hydroxylzahl von 100 bis 400 mg KOH/g und eine Tg > -35°C, welche zu mindestens 25 Gew.-%, bezogen auf den Bindemittelanteil des Beschichtungsmittels, enthalten ist,
(B) mindestens eine Isocyanatgruppen-haltige Verbindung (B) mit freien oder blockierten Isocyanatgruppen, wobei die Komponente (B) mindestens eine Struktureinheit der Formel (I)

   -NR-(X-SiR"ₓ(OR')₃₋ₓ) (I),

   und/oder mindestens eine Struktureinheit der Formel (II)

   -N(X-SiR"ₓ(OR')₃₋ₓ)ₙ(X'-SiR"_{y}(OR')_{3-y})ₘ (II),

   mit
   R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
   R' = Wasserstoff, Alkyl oder Cycloalkyl, wobei die Kohlenstoffkette durch nicht benachbarte Sauerstoff-, Schwefel- oder NRa-Gruppen unterbrochen sein kann,
   X, X' = linearer und/oder verzweigter Alkylen oder Cycloalkylenrest mit 1 bis 20 Kohlenstoffatomen,
   R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann,
   n = 0 bis 2, m = 0 bis 2, m+n = 2 sowie x, y = 0 bis 2,
   und
(C) mindestens einen Katalysator (C) für die Vernetzung von Silangruppen,
   gekennzeichnet dadurch, dass zudem
(D) mindestens ein alkoxysilylfunktionelles Siloxan der Formel (III)

   R¹-SiR²₂-Aₓ-B_{y}-O-SiR³₂-R⁴ (III)

   worin
   A eine Gruppe -[O-SiR⁵₂]- und B eine Gruppe -[O-SiR⁶R⁷]- ist,
   R², R³, R⁵, und R⁶ unabhängig voneinander lineare oder verzweigte Alkylgruppen mit 1 bis 4 Kohlenstoffatomen sind,
   R¹, R⁴, und R⁷ unabhängig voneinander eine Gruppe -L-R⁸ sind,
   worin L= eine lineare oder verzweigte 2-bindige Alkylgruppe und
   R⁸ = H oder -Si(R⁹)_{z}(OR¹⁰)_{3-z} mit R⁹, R¹⁰ = eine lineare oder verzweigte Alkylgruppe mit 1-4 Kohlenstoffatomen und z = 0, 1, oder 2, bevorzugt z = 0, ist, mit der Vorgabe, das mindestens einer der Reste R¹ oder R⁴ und/oder mindestens eine Gruppe B eine Gruppe R⁸ = -Si(R⁹)_{z}(OR¹⁰)_{3-z} beinhaltet,
   x unabhängig für eine ganze Zahl von 1-20 steht,
   y unabhängig für eine ganze Zahl von 0-10 steht,
   wobei bevorzugt x+y ≤ 20 ist,
   enthalten ist.

Das neue nichtwässrige Beschichtungsmittel wird in der Folge auch als erfindungsgemäßes nichtwässriges Beschichtungsmittel bezeichnet. Bevorzugte Ausführungsformen des erfindungsgemäßen nichtwässrigen Beschichtungsmittels gehen aus der folgenden Beschreibung sowie den Unteransprüchen hervor.

Gegenstand der vorliegenden Erfindung ist auch ein Verfahren zur Herstellung von Beschichtungen und mehrschichtigen Beschichtungen unter Einsatz des erfindungsgemäßen Beschichtungsmittels sowie eine mit Hilfe des besagten Verfahrens hergestellte Beschichtung beziehungsweise Mehrschichtbeschichtung. Zudem betrifft die vorliegende Erfindung die Verwendung des erfindungsgemäßen Beschichtungsmittels zur Verbesserung der Anschmutzungsresistenz und den (Selbst)reinigungseigenschaften von Beschichtungen, insbesondere von Klarlackbeschichtungen.

Die mittels des erfindungsgemäßen Beschichtungsmittels hergestellte Beschichtung weist insbesondere eine ausgezeichnete Anschmutzungsresistenz und gute (Selbst)reinigungseigenschaften unter Beibehaltung eines guten Erscheinungsbildes, insbesondere einer guten Schleier- und Kraterbeständigkeit, auch nach Bewitterungsbelastung, auf.

### Beschreibung der Erfindung

### Das erfindungsgemäße Beschichtungsmittel

Das erfindungsgemäße Beschichtungsmittel ist nichtwässrig. Dies bedeutet bekanntermaßen, dass im Rahmen der vorliegenden Erfindung die Beschichtungsmittel organische Lösemittel enthalten oder als wasserfreie Systeme formuliert sind. Jedenfalls enthält das Beschichtungsmittel nur in untergeordneten Mengen Wasser, bevorzugt kein Wasser (wasserfrei). Insbesondere bevorzugt ist weniger als 5 Gew.-% Wasser, bevorzugt weniger als 2,5 Gew.-% Wasser, bezogen auf das Gesamtgewicht des Beschichtungsmittels, enthalten. Wasser wird also bevorzugt lediglich, wenn überhaupt, durch den Einsatz von beispielsweise typischen Lackadditiven in dem Beschichtungsmittel eingesetzt.

### Die Hydroxylgruppen-haltige Verbindung (A)

Das nichtwässrige Beschichtungsmittel enthält mindestens eine Hydroxylgruppen-haltige Verbindung (A) mit einer Hydroxylzahl von 100 bis 400 mg KOH/g und einer Tg > -35°C, welche zu mindestens 25 Gew.-%, bezogen auf den Bindemittelanteil des Beschichtungsmittels, enthalten ist.

Als Hydroxylgruppen-haltige Verbindung (A) können alle dem Fachmann in diesem Sinne bekannten Verbindungen eingesetzt werden. Bevorzugt sind solche Verbindungen (A), die im Mittel mindestens 2 Hydroxylgruppen pro Molekül aufweisen und oligomer und/oder polymer sind. Es können als Verbindungen (A) auch Mischungen verschiedener oligomerer und/oder polymerer Hydroxylgruppen-haltiger Verbindungen eingesetzt werden.

Die bevorzugten oligo- und/oder polymeren Hydroxylgruppen-haltigen Verbindungen (A) weisen massenmittlere Molekulargewichte Mw > 500 Dalton, gemessen mittels Gelpermeationschromatographie (GPC) gegen einen Polystyrolstandard, bevorzugt zwischen 800 und 100.000 Dalton, insbesondere zwischen 1.000 und 50.000 Dalton auf.

Besonders bevorzugt sind Polyesterpolyole, Polyurethanpolyole, Polysiloxanpolyole, Polyacrylatpolyole und/oder Polymethacrylatpolyole sowie deren Mischpolymerisate, im folgenden Poly(meth)acrylatpolyole genannt.

Die Hydroxylgruppen-haltigen Verbindungen (A) weisen eine Hydroxylzahl (OH-Zahl) von 100 bis 400 mg KOH/g, bevorzugt von 150 bis 250 KOH/g auf. Die OH-Zahl gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Die Glasübergangstemperatur Tg der Hydroxylgruppen-haltigen Verbindungen (A) beträgt über -35°C, bevorzugt von -35 bis 100 °C, besonders bevorzugt von -30°C bis 80°C (gemessen mittels DSC-Messungen nach DIN-EN-ISO 11357-2, siehe auch Beispielteil).

Zudem weisen die Hydroxylgruppen-haltigen Verbindungen (A) bevorzugt eine Säurezahl von 0 bis 30 mg KOH/g auf. Die Säurezahl gibt hierbei die Anzahl der mg Kaliumhydroxid an, die zur Neutralisation von 1 g der jeweiligen Verbindung verbraucht wird (DIN EN ISO 2114).

Geeignete Polyesterpolyole sind beispielsweise in EP 0 994 117 A1 und EP 1 273 640 A1 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP 273 640 A1 beschrieben. Geeignete Polysiloxanpolyole sind beispielsweise in der WO 01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Ganz besonders bevorzugt enthält die Komponente (A) ein oder mehrere Poly(meth)acrylatpolyole. Zusammen mit dem oder den Poly(meth)acrylatpolyolen können weitere oligomere und/oder polymere Polyhydroxylgruppen-haltige Verbindungen, beispielsweise Polyesterpolyole, Polyurethanpolyole und Polysiloxanpolyole, insbesondere Polyesterpolyole, eingesetzt werden.

Die erfindungsgemäß ganz besonders bevorzugten Poly(meth)acrylatpolyole sind in der Regel Copolymerisate und weisen vorzugsweise massenmittlere Molekulargewichte M_{w} zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Bevorzugt beträgt die Glasübergangstemperatur Tg der ganz besonders bevorzugten Poly(meth)acrylatpolyole von -35 bis 100 °C, insbesondere von -35 bis 20 °C (gemessen mittels DSC-Messungen nach DIN-EN-ISO 11357-2, siehe auch Beispielteil).

Die ganz besonders bevorzugten Poly(meth)acrylatpolyole weisen eine OH-Zahl von 100 bis 300 mg KOH/g, insbesondere von 150 bis 200 mg KOH/g, sowie eine Säurezahl von 0 bis 30 mg KOH/g auf.

Die Hydroxylzahl (OH-Zahl) und Säurezahl werden wie oben beschrieben bestimmt (DIN 53240-2 und DIN EN ISO 2114).

Als hydroxylgruppenhaltige Monomerbausteine werden bevorzugt Hydroxyalkyl-(meth)acrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Erfindungsgemäße Beschichtungsmittel enthalten zu mindestens 25 Gew.-%, bevorzugt von 25 bis 70 Gew.-%, jeweils bezogen auf den Bindemittelanteil des Beschichtungsmittels, mindestens eine Hydroxylgruppen-haltige Verbindung (A) mit einer Hydroxylzahl von 100 bis 400 mg KOH/g und einer Tg > -35°C, insbesondere mindestens eine Hydroxylgruppen-haltige Verbindung (A) mit einer Hydroxylzahl von 100 bis 250 mg KOH/g und einer Tg von -35°C bis 100°C..

Ganz besonders bevorzugt sind erfindungsgemäße Beschichtungsmittel, die zu mindestens 25 Gew.-%, bevorzugt von 25 bis 70 Gew.-%, jeweils bezogen auf den Bindemittelanteil des Beschichtungsmittels, mindestens ein Poly(meth)acrylatpolyol (A) mit einer Hydroxylzahl von 100 bis 300 mg KOH/g und einer Tg von -35°C bis 100°C, insbesondere mindestens ein Poly(meth)acrylatpolyol (A) mit einer Hydroxylzahl von 150 bis 200 mg KOH/g und einer Tg von -35°C bis 20°C, enthalten.

Dabei ist unter dem Bindemittelanteil jeweils der in Tetrahydrofuran (THF) lösliche Anteil des Beschichtungsmittels vor der Vernetzung zu verstehen. Dazu wird eine kleine Probe (P) gewogen, in der 50- bis 100-fachen Menge THF gelöst, unlösliche Bestandteile werden abfiltriert, das THF abgedampft und anschließend die Masse der zuvor in THF gelösten Bestandteile bestimmt, indem für 60 Minuten bei 130°C getrocknet wird, im Exsikkator abgekühlt wird und dann erneut gewogen wird. Der Rückstand entspricht dem Bindemittelanteil der Probe (P) und wird in Gew.-% angegeben.

Bekanntermaßen werden als Bindemittel organische Verbindungen in Beschichtungsmitteln bezeichnet, die für die Filmbildung verantwortlich sind. Sie stellen den nichtflüchtigen Anteil des Beschichtungsmittels ohne Pigmente und Füllstoffe entsprechend der einschlägigen DIN EN ISO 4618 dar. Aus dem Beschichtungsmittel wird also nach der Applikation auf ein (heterogenes) Substrat ein Polymerfilm gebildet, sodass die gebildete Lackschicht beziehungsweise Beschichtung auf einer organischen Polymermatrix basiert.

### Die Isocyanatgruppen-haltige Verbindung (B)

Das nichtwässrige Beschichtungsmittel enthält mindestens eine spezielle Isocyanatgruppen-haltige Verbindung (B) mit freien oder blockierten Isocyanatgruppen.

Die als Grundkörper für die erfindungsgemäß bevorzugt eingesetzten Isocyanatgruppen-haltige Verbindungen (B) dienenden Di- und/oder Polyisocyanate sind bevorzugt an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethyl-hexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur® W der Fa. Covestro), Tetramethylxylyldiisocyanate (z.B. TMXDI® der Fa. American Cyanamid) und Mischungen der vorgenannten Polyisocyanate. Weiterhin bevorzugte Polyisocyanate sind die Isocyanurat- Trimere und/oder Allophanat- Dimere und/oder Biuret- Dimere und/oder Uretdion-Dimere der vorgenannten Diisocyanate.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in der US 4,598,131 beschrieben.

Besonders bevorzugte Polyisocyanatgrundkörper für die Komponente (B) sind Hexamethylendiisocyanat, Isophorondiisocyanat und 4,4'-Methylendicyclohexyldiisocyanat und/oder deren Isocyanurat- Trimere und/oder deren Allophanat- Dimere und/oder deren Biuret- Dimere und/oder deren Uretdion-Dimere.

Die als Komponente (B) eingesetzten Polyisocyanate bzw. deren Isocyanurat- Trimere und/oder deren Allophanat- Dimere und/oder deren Biuret- Dimere und/oder deren Uretdion-Dimere enthalten zusätzlich noch mindestens eine Struktureinheit der Formel (I)

-NR-(X-SiR"ₓ(OR')₃₋ₓ) (I),

und/oder mindestens eine Struktureinheit der Formel (II)

-N(X-SiR"ₓ(OR')₃₋ₓ)ₙ(X'-SiR"_{y}(OR')_{3-y})ₘ (II),

wobei
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen- oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 sowie x, y = 0 bis 2 ist.

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy-Rest gegenüber einem Ethoxy-Rest und dieser wiederum gegenüber einem Propoxy-Rest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X, X' zwischen Silan - Funktionalität und organischer funktioneller Gruppe, die zur Reaktion mit dem zu modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silanen vorhandenen Propylengruppe zwischen Si-Atom und funktioneller Gruppe ist.

Die erfindungsgemäß bevorzugt eingesetzten, mit den Struktureinheiten (I) und/oder (II) funktionalisierten Komponenten (B) werden insbesondere durch Umsetzung von Polyisocyanaten bzw. von deren Isocyanurat- Trimeren und/oder deren Allophanat-Dimeren und/oder deren Biuret- Dimeren und/oder deren Uretdion-Dimeren mit mindestens einer Verbindung der Formel (la)

H-NR-(X-SiR"ₓ(OR')₃₋ₓ) (Ia),

und/oder mit mindestens einer Verbindung der Formel (IIa)

HN(X-SiR"ₓ(OR')₃₋ₓ)ₙ(X'-SiR"_{y}(OR')_{3-y})ₘ (IIa),

erhalten, wobei die Substituenten die oben genannte Bedeutung haben.

Die erfindungsgemäß besonders bevorzugt eingesetzten, mit den Struktureinheiten (I) und (II) funktionalisierten Verbindungen (B) werden besonders bevorzugt durch Umsetzung von Polyisocyanaten bzw. von deren Isocyanurat- Trimeren und/oder deren Allophanat- Dimeren und/oder deren Biuret- Dimeren und/oder deren Uretdion-Dimeren mit mindestens einer Verbindung der Formel (la) und mit mindestens einer Verbindung der Formel (IIa) erhalten, wobei die Substituenten die oben genannte Bedeutung haben.

Erfindungsgemäß bevorzugte Verbindungen (IIa) sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASYLAN® der Fa. Evonik bzw. Silquest ® der Fa. Momentive verfügbar.

Erfindungsgemäß bevorzugte Verbindungen (la) sind N-(2- (trimethoxysilyl)ethyl)-alkylamine, N-(3-(trimethoxysilyl)propyl)alkylamine, N-(4-(trimethoxysilyl)butyl)alkylamine, N-(2-(triethoxysilyl)ethyl)alkylamine, N-(3-(triethoxysilyl)propyl)alkylamine und/oder N-(4-(triethoxysilyl)butyl)alkylamine. Ganz besonders bevorzugt ist N-(3-(trimethoxysilyl) propyl)butylamin. Solche Aminosilane sind beispielsweise unter dem Markennamen DYNASYLAN® der Fa. Evonik bzw. Silquest® der Fa. Momentive verfügbar.

Bevorzugt sind in der Komponente (B) zwischen 10 und 90 mol-%, bevorzugt zwischen 20 und 80 mol-%, besonders bevorzugt mehr als 30 und weniger als 70 mol-% und ganz besonders bevorzugt zwischen 31 und 50 mol-%, der ursprünglich vorhandenen Isocyanatgruppen zu Struktureinheiten (I) und/oder (II) umgesetzt worden.

Der Gehalt an Struktureinheiten (I) in der Verbindung (B) liegt bevorzugt zwischen 5 und 70 mol-%, besonders bevorzugt zwischen 8 und 50 mol-%, ganz besonders bevorzugt zwischen 9 und 40 mol-% jeweils bezogen auf die Gesamtheit der Struktureinheiten (I) plus (II), und der Gesamtgehalt an Struktureinheiten (II) in der Komponente (B) liegt bevorzugt zwischen 95 und 30 mol-%, besonders bevorzugt zwischen 92 und 50 mol-% und ganz besonders bevorzugt zwischen 91 und 60 mol-%, jeweils bezogen auf die Gesamtheit der Struktureinheiten (I) plus (II).

Es ist ferner besonders bevorzugt, dass in der Isocyanatgruppen-haltigen Verbindung (B) mehr als 25 mol-% und weniger als 36 mol-%, bevorzugt zwischen 26 und 35 mol-%, der ursprünglich vorhandenen Isocyanatgruppen zu Bissilanstruktureinheiten (II) umgesetzt worden sind.

Ganz besonders bevorzugte Beschichtungsmittel werden erhalten, wenn in der Verbindung (B) der Gesamtgehalt an Struktureinheiten (I) zwischen 9 und 40 mol-% und der Gesamtgehalt an Struktureinheiten (II) zwischen 91 und 60 mol-%, jeweils bezogen auf die Gesamtheit der Struktureinheiten (I) plus (II), liegt
und
zwischen 31 und 50 mol-%, der ursprünglich in (B) vorhandenen Isocyanatgruppen zu Struktureinheiten (I) und (II) umgesetzt worden sind
und
in der Verbindung (B) zwischen 26 und 35 mol-% der ursprünglich vorhandenen Isocyanatgruppen zu Struktureinheiten (II) umgesetzt worden sind.

Die Umsetzung der Isocyanatgruppen-haltigen Verbindungen (B) mit den Verbindungen (la) und/oder (IIa) erfolgt vorzugsweise in Inertgasatmosphäre bei Temperaturen von maximal 100 ºC, bevorzugt von maximal 60 ºC.

Die freien Isocyanatgruppen der isocyanatgruppenhaltigen Verbindungen B können auch in blockierter Form eingesetzt werden. Dies ist bevorzugt dann der Fall, wenn die erfindungsgemäßen Beschichtungsmittel als einkomponentige Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Bevorzugt werden Blockierungsmittel, wie sie in EP 0 626 888 A1 und EP 0 692 007 A1 beschrieben sind, eingesetzt.

Bevorzugt sind erfindungsgemäße Beschichtungsmittel, die von 15 bis 60 Gew.-%, bevorzugt von 20 bis 50 Gew.-%, jeweils bezogen auf den Bindemittelanteil (Definition siehe oben) des Beschichtungsmittels, der Isocyanatgruppen-haltigen Verbindung (B) enthalten.

### Katalysator (C)

Das erfindungsgemäße Beschichtungsmittel enthält mindestens einen Katalysator (C) für die Vernetzung der Silangruppen. Beispiele sind Metallkomplexe mit Chelatliganden auf der Basis von Zink oder Aluminium, wie die z.B. in der WO 05/03340 beschriebenen Titanate oder Lewis-Säuren, wobei aber bei der Auswahl der Katalysatoren darauf zu achten ist, dass die Katalysatoren nicht zu einer Vergilbung der Beschichtungsmittel führen. Außerdem sind einige üblicherweise eingesetzte Katalysatoren (z.B. zinnorganische Verbindungen) aus toxikologischen Gründen weniger erwünscht.

Es ist daher bevorzugt, dass als Katalysator (C) phosphorhaltige, insbesondere phosphorhaltige und stickstoffhaltige Katalysatoren eingesetzt werden. Dabei können auch Mischungen aus zwei oder mehreren verschiedenen Katalysatoren (C) eingesetzt werden.

Beispiele für geeignete phosphorhaltige Katalysatoren (C) sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE 102005045228 A1 beschrieben.

Insbesondere werden aber substituierte Phosphorsäuremonoester und Phosphorsäurediester, vorzugsweise aus der Gruppe bestehend aus acyclischen Phosphorsäurediestern und cyclischen Phosphorsäurediestern, besonders bevorzugt Aminaddukte der Phosphorsäure-mono- und -di-ester, eingesetzt.

Ganz besonders bevorzugt werden als Katalysator (C) die entsprechenden aminblockierten Phosphorsäureester, und hier insbesondere aminblockierte Phosphorsäureethylhexylester und aminblockierte Phosphorsäurephenylester, ganz besonders bevorzugt aminblockierte Phosphorsäure-bis(2-ethylhexyl)ester eingesetzt.

Als Beispiele für Amine, mit welchem die Phosphorsäureester blockiert werden, sind insbesondere tertiäre Amine, beispielsweise bicyclische Amine, wie z. B. Diazabicyclootan (DABCO), Diazabicyclononen (DBN), Diazabicycloundecen (DBU), Dimethyldodecylamin oder Triethylamin, zu nennen. Besonders bevorzugt werden zur Blockierung der Phosphorsäureester tertiäre Amine eingesetzt, die eine gute Wirksamkeit des Katalysators bei den Härtungsbedingungen von 140 °C gewährleisten.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries als besonders geeigneter Katalysator auf der Basis eines aminblockierten Phosphorsäureteilesters genannt. Die Katalysatoren werden vorzugsweise in Anteilen von 0,01 bis 10 Gew.-%, besonders bevorzugt in Anteilen von 0,1 bis 5 Gew.-%, bezogen auf den Bindemittelanteil (Definition siehe oben) des erfindungsgemäßen Beschichtungsmittels, eingesetzt. Eine geringere Wirksamkeit des Katalysators kann dabei durch entsprechend höhere Einsatzmengen teilweise kompensiert werden.

Die erfindungsgemäßen Beschichtungsmittel können noch einen weiteren AminKatalysator auf Basis eines bicyclischen Amins, insbesondere eines ungesättigten bicyclischen Amins, enthalten. Beispiele für geeignete Amin-Katalysatoren sind 1,5-Diazabicyclo[4.3.0]non-5-en oder 1,8-Diazabicyclo[5.4.0]undec-7-en.

Diese Amin-Katalysatoren werden, sofern eingesetzt, vorzugsweise in Anteilen von 0,01 bis 10 Gew.-%, besonders bevorzugt in Anteilen von 0,1 bis 5 Gew.-%, bezogen auf den Bindemittelanteil des erfindungsgemäßen Beschichtungsmittels, eingesetzt.

### Alkoxysilylfunktionelles Siloxan (D)

Das nichtwässrige Beschichtungsmittel enthält zudem mindestens ein alkoxysilylfunktionelles Siloxan (D).

Siloxane sind dem Fachmann bekannt. Es handelt sich um von reinen Silanen (das heißt binären aus Si und H bestehenden Verbindungen) abgeleitete Komponenten (Derivate von reinen Silanen) der allgemeinen Formel R₃Si-[O-SiR₂]ₙ-O-SiR₃, wobei R Wasserstoffatome oder Alkylgruppen sein können. In Siloxanen sind die Siliziumatome also über genau ein Sauerstoffatom mit ihrem benachbarten Siliziumatom verknüpft, sie enthalten zumindest eine Si-O-Si Bindung. Ist mindestens eines der Wasserstoffatome durch einen organischen Rest wie beispielsweise eine Alkylgruppe ersetzt, werden diese auch als Organosiloxane bezeichnet. Oligomere oder polymere Organosiloxane (Siloxane mit R ≠ H) besitzen lange Si-O- Hauptketten und werden wiederum als Silicone bezeichnet.
Enthält der zuvor beschriebene organische Rest des Organosiloxans zudem mindestens eine Alkoxysilylgruppe, ist in dem organischen Rest also mindestens ein Wasserstoffrest durch eine Alkoxysilylgruppe substituiert, wodurch also zumindest anteilig ein Wasserstoff des vom reinen Siloxan abgeleiteten Derivats durch einen organischen Rest substituiert ist, der selber wiederum eine alkoxysilylfunktionelle Gruppe enthält, wird dies im Rahmen der vorliegenden Erfindung als alkoxysilylfunktionelles Siloxan bezeichnet.
Bei einem alkoxysilylfunktionellen Rest handelt es sich um eine funktionelle Gruppe, die sich von einem Alkoxysilan ableitet, eine von einem reinen Silan abgeleitete Komponente enthaltend eine Gruppe Si-OR. Es ist also mindestens ein Wasserstoffatom eines reinen Silans durch eine Alkoxygruppe -OR, also eine über Sauerstoff mit dem Silizium verbundene Alkylgruppe, substituiert. Beispielsweise seien Mono-, Di-, oder Tri-methoxy- oder -ethoxy-silan genannt.
Demzufolge handelt es sich bei den erfindungsgemäß einzusetzenden alkoxysilylfunktionellen Siloxanen um Derivate des Siloxans, in denen mindestens ein Wasserstoffatom durch einen organischen Rest substituiert wurde, in dem wiederum mindestens ein Wasserstoffrest durch eine Alkoxysilylgruppe ersetzt wurde. Die Alkoxysilylgruppe ist demzufolge immer als funktionelle Gruppe einer Alkylgruppe zu verstehen, die selber an dem Siloxangerüst angebunden ist. Die Alkoxysilylgruppe ist also immer über einen zweibindigen organischen Rest R, beispielsweise ein Alkylen, mit dem Si-O-Si Gerüst verbunden und bindet niemals direkt an das Siloxan Grundgerüst aus Si-O-Si Einheiten an.

Das mindestens eine alkoxysilylfunktionelle Siloxan (D) kann linear, verzweigt, oder cyclisch sein. Bevorzugt ist es linear.

Bevorzugte, alkoxysilylfunktionelle Siloxane (D) können über die folgende allgemeine Formel (III) beschrieben werden:

R¹-SiR²₂-Aₓ-B_{y}-O-SiR³₂-R⁴ (III)

worin
A eine Gruppe -[O-SiR⁵₂]- und B eine Gruppe -[O-SiR⁶R⁷]- ist,
R², R³, R⁵, und R⁶ unabhängig voneinander lineare oder verzweigte Alkylgruppen mit 1 bis 4 Kohlenstoffatomen sind,
R¹, R⁴, und R⁷ unabhängig voneinander eine Gruppe -L-R⁸ sind, worin
L = eine lineare oder verzweigte 2-bindige Alkylgruppe und
R⁸ = H oder -Si(R⁹)_{z}(OR¹⁰)_{3-z} mit R⁹, R¹⁰ = eine lineare oder verzweigte Alkylgruppe mit 1-4 Kohlenstoffatomen und z = 0, 1, oder 2, bevorzugt z = 0, ist, mit der Vorgabe, das mindestens einer der Reste R¹ oder R⁴ und/oder mindestens eine Gruppe B eine Gruppe R⁸ = -Si(R⁹)_{z}(OR¹⁰)_{3-z} beinhaltet,
x unabhängig für eine ganze Zahl von 1-20 steht,
y unabhängig für eine ganze Zahl von 0-10 steht,
wobei bevorzugt x+y ≤ 20 ist,

Das Siloxan (D) enthält also jedenfalls mindestens eine Gruppe -Si(R⁹)_{z}(OR¹⁰)_{3-z}.

Ist y > 0, sind neben Bausteinen A auch Bausteine B in der Polysiloxankette enthalten. Ist dagegen y = 0, sind lediglich Bausteine A vorhanden. Bevorzugt sind lediglich Bausteine A vorhanden (y = 0). Nochmals bevorzugt ist y = 0 und x eine Zahl von 6 bis 14.

Die alkoxysilylfunktionellen Siloxane (D) können eine lineare oder verzweigte Form haben, je nachdem, welche Reste R¹, R⁴ und/oder R⁷ eine Alkoxysilylgruppe enthalten. Sind Alkoxysilylgruppen in der Form des Rests R⁸ = -Si(R⁹)_{z}(OR¹⁰)_{3-z} mit R⁹, R¹⁰ = eine lineare oder verzweigte Alkylgruppe mit 1-4 Kohlenstoffatomen und z = 0, 1, oder 2, bevorzugt z = 0, nur terminal in den Resten R¹ und R⁴ angeordnet, ist das alkoxysilylfunktionelle Siloxan linear. Sind hingegen auch Alkoxysilylgruppen in den Rest R⁷ enthalten, ist das Siloxan verzweigt. Bevorzugt ist das Siloxan linear.

Die Reste R¹, R⁴ und R⁷ sind gleiche oder verschiedene Reste, wobei immer mindestens einer der Reste eine Gruppe -L-R⁸ darstellt, in der R⁸ eine Alkoxysilylgruppe entspricht. Ganz besonders bevorzugt weist mindestens eine dieser Reste R¹, R⁴ und R⁷ eine Gruppe -L-R⁸ auf, in der L eine Ethylengruppe und R⁸ eine Trialkoxysilangruppe ist. Ganz besonders bevorzugt ist L eine Ethylengruppe und R⁸ eine Trimethoxy- oder Triethoxysilangruppe. Nochmals ganz besonders bevorzugt ist y = 0 und es stellen beide terminalen Gruppen R¹ und R⁴ eine Gruppe -L-R⁸dar, in der L eine Ethylengruppe und R⁸ eine Trimethoxy- oder Triethoxysilangruppe ist. In einer weiteren ganz besonders bevorzugten Ausführungsform ist y > 0, entspricht R⁷ einer Gruppe -L-R⁸, in der L eine Ethylengruppe und R⁸ eine Trialkoxysilangruppe ist und R¹ und R⁴ eine Gruppe -L-R⁸ sind, in der R⁸ einem Wasserstoffatom entspricht.

Besonders bevorzugt sind die Reste R², R³, R⁵, R⁶, R⁹ und R¹⁰ gleiche oder verschiedene Alkylreste, ganz besonders bevorzugt sind diese Reste R², R³, R⁵, R⁶, R⁹ und R¹⁰ lineare Alkylgruppen mit ein bis vier Kohlenstoffatomen, und nochmals ganz besonders bevorzugt sind die Reste R², R³, R⁵, R⁶, R⁹ und R¹⁰ Methyl- und/oder Ethylreste, insbesondere Methylreste.

In dem erfindungsgemäßen Beschichtungsmittel ist mindestens ein alkoxysilylfunktionelles Siloxan (D) enthalten. Demnach können alkoxysilylfunktionelle Siloxane mit der Alkoxysilylfunktion in der Seitenkette neben solchen vorliegen, in der die Alkoxysilylfunktion(en) terminal an der Siloxankette vorliegen.

Bevorzugt werden solche alkoxysilylfunktionellen Siloxane (D) dem erfindungsgemäßen Beschichtungsmittel hinzugefügt, die ein Herabsetzen der Oberflächenenergie der durch Applikation und Härtung des erfindungsgemäßen Beschichtungsmittels hervorgehenden Beschichtung bewirken.

Solche besonders bevorzugten, alkoxysilylfunktionellen Siloxane (D) sind im Handel über die Firma Shin Etsu erhältlich.

Bevorzugt enthalten die erfindungsgemäßen Beschichtungsmittel von 0,05 bis 15,0 Gew.-%, bevorzugt von 0,1 bis 8,0 Gew.-% und besonders bevorzugt von 0,2 bis 5,0 Gew.-%, mindestens eines alkoxysilylfunktionellen Siloxans (D), wobei die Gew.-%-Angaben jeweils bezogen sind auf den Bindemittelanteil (Definition siehe oben) des Beschichtungsmittels.

### Die Kombination der Komponenten (A), (B), (C) und (D) sowie weitere Komponenten des Beschichtungsmittels

Handelt es sich um einkomponentige (1K-)Beschichtungsmittel, so werden Isocyanatgruppen-haltige Verbindungen (B) gewählt, deren freie Isocyanatgruppen mit Blockierungsmitteln blockiert sind. Beispielsweise können die Isocyanatgruppen mit substituierten Pyrazolen, insbesondere mit Alkyl-substituierten Pyrazolen, wie 3-Methylpyrazol, 3,5-Dimethylpyrazol, 4-Nitro-3,5-dimethypyrazol, 4-Bromo-3,5-dimethylpyrazol und Ähnliche blockiert werden. Besonders bevorzugt werden die Isocyanatgruppen der Komponente (B) mit 3,5-Dimethylpyrazol blockiert.

Bei den erfindungsgemäß besonders bevorzugten zwei-komponentigen (2K-) Beschichtungsmitteln wird kurz vor der Applikation des Beschichtungsmittels eine Beschichtungsmittelkomponente, enthaltend die Hydroxylgruppen-haltige Verbindung (A) sowie weitere nachfolgend beschriebenen Komponenten, mit einer weiteren Beschichtungsmittelkomponente, enthaltend die Isocyanatgruppen-haltige Verbindung (B) sowie gegebenenfalls weitere der nachfolgend beschriebenen Komponenten in an sich bekannter Weise vermischt, wobei in der Regel die Beschichtungsmittelkomponente, die die Verbindung (A) enthält zudem den Katalysator (C), das alkoxysilylfunktionelle Siloxan (D) sowie einen Teil des Lösemittels enthält. Bevorzugt ist das alkoxysilylfunktionelle Siloxan (D) lediglich in der Beschichtungsmittelkomponente, die die Verbindung (A) enthält, enthalten.

Bevorzugt werden solche Hydroxylgruppen-haltige Verbindungen (A) eingesetzt, die in Kombination mit den weiteren Bestandteilen, insbesondere den Isocyanat-haltigen Verbindungen (B), zu Beschichtungen führen, die eine Glasübergangstemperatur (Tg) von bevorzugt über 70°C, insbesondere bevorzugt über 75°C und eine Vernetzungsdichte von bevorzugt über 3,0x10⁷ Pa, insbesondere über 4,0x10⁷ Pa (Messmethoden siehe Beispiele) besitzen.

Die Gewichtsanteile der Hydroxylgruppen-haltigen Verbindung (A) und der Isocyanatgruppen-haltigen Verbindung (B) werden vorzugsweise solchermaßen gewählt, dass das molare Äquivalentverhältnis der Hydroxylgruppen der Verbindung (A) zu den Isocyanatgruppen der Verbindung (B) zwischen 1:0,5 und 1:1,5, bevorzugt zwischen 1:0,8 und 1:1,2 besonders bevorzugt zwischen 1:0,9 und 1:1,1 liegt.

Die Hydroxylgruppen-haltige Verbindung (A) und die Isocyanatgruppen-haltige Verbindung (B) können in einem geeigneten organischen Lösemittel vorliegen.

Als organische Lösemittel (L) für die erfindungsgemäßen Beschichtungsmittel sind insbesondere solche geeignet, die im Beschichtungsmittel chemisch inert gegenüber den Verbindungen (A) und (B) sind und die auch bei der Härtung des Beschichtungsmittels nicht mit (A) und/oder (B) reagieren. Beispiele für solche Lösemittel sind aliphatische und/oder aromatische Kohlenwasserstoffe wie Toluol, Xylol, Solventnaphtha, Solvesso 100 oder Hydrosol® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten organischen Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das organische Lösemittel, auf.

Die erfindungsgemäßen Beschichtungsmittel sind nichtwässrige Beschichtungsmittel und können organische Lösemittel enthalten oder als lösemittelfreie Systeme formuliert sein. Beispiele für geeignete Lösemittel sind die bereits oben aufgeführten organischen Lösemittel (L). Das beziehungsweise die organischen Lösemittel werden in den erfindungsgemäßen Beschichtungsmitteln bevorzugt in einer solchen Menge eingesetzt, dass der Feststoffgehalt des Beschichtungsmittels mindestens 45 Gew.-%, besonders bevorzugt mindestens 55 Gew.-%, beträgt.

Neben den Verbindungen (A) und (B) können noch weitere Bindemittel (E) eingesetzt werden, welche vorzugsweise mit den Hydroxylgruppen der Hydroxylgruppen-haltigen Verbindung (A) und/oder mit den freien Isocyanat-gruppen der Verbindung (B) und/oder mit den Alkoxysilylgruppen der Verbindung (B) und/oder der Verbindung (D) reagieren und Netzwerkpunkte ausbilden können. Weitere Bindemittel (E) liegen bevorzugt in organischen Lösemitteln vor.

Beispielsweise sind als Komponente (E) Aminoplastharze und/oder Epoxidharze verwendbar. Es kommen die üblichen und bekannten Aminoplastharze in Betracht, deren Methylol- und/oder Methoxymethylgruppen teilweise mittels Carbamat- oder Allophanatgruppen funktionalisiert sein können. Vernetzungsmittel dieser Art werden in den Patentschriften EP 0245700 B1 und US 2005/0182189 A1, Seite 1, Absatz [0014], bis Seite 4, Absatz [0028], beschrieben sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Beispiele für geeignete Aminoplastharze (E) sind alle im Bereich der Lackindustrie üblicherweise eingesetzten Aminoplastharze, wobei über die Reaktivität des Aminoplastharzes die Eigenschaften der resultierenden Beschichtungsmittel gesteuert werden können. Es handelt sich um Kondensationsprodukte aus Aldehyden, insbesondere Formaldehyd, und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Es werden insbesondere mit niedrigen Alkoholen veretherte Aminoplastharze eingesetzt. Bevorzugt werden mit Methanol und/oder Ethanol und/oder Butanol veretherte Aminoplastharze, beispielsweise in dem Handel unter den Bezeichnungen Cymel®, Resimene®, Maprenal® und Luwipal® erhältlichen Produkte, eingesetzt.

Bevorzugt enthalten die erfindungsgemäßen Beschichtungsmittel von 0 bis 15 Gew.-%, bezogen auf den Bindemittelanteil des erfindungsgemäßen Beschichtungsmittels, eines oder mehrerer Aminoplastharze und/oder eines oder mehrerer Tris(Alkoxycarbonylamino)Triazine (E).

Darüber hinaus kann das erfindungsgemäße Beschichtungsmittel mindestens ein übliches und bekanntes, von den obigen Komponenten verschiedenes, Lackadditiv (F) in wirksamen Mengen, das heißt in Mengen vorzugsweise bis zu 30 Gew.-%, besonders bevorzugt bis zu 25 Gew.-% und insbesondere bis zu 20 Gew.-%, jeweils bezogen auf den Bindemittelanteil des Beschichtungsmittels, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Reaktivverdünner, insbesondere Reaktivverdünner, die erst durch Reaktion mit weiteren Bestandteilen bzw. Wasser reaktiv werden, wie beispielsweise Incozol® oder Asparaginsäureester
- Netzmittel wie fluorhaltige Verbindungen, Carbonsäurehalbester, Phosphorsäureester, Polyacrylsäuren und deren Copolymere oder Polyurethane;
- Haftvermittler;
- Verlaufsmittel;
- Filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Rheologiesteuernde Additive, wie die aus den Patentschriften WO 94/22968, EP 0276501 A1, EP 0249201 A1 oder WO 97/12945 bekannten Additive; vernetzte polymere Mikroteilchen, wie sie beispielsweise in der EP 0008127 A1 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- Flammschutzmittel.

Besonders bevorzugt enthalten die erfindungsgemäß eingesetzten Beschichtungsmittel neben dem alkoxysilylfunktionellen Siloxan (D) als Additiv (F) weniger als 1 Gew.-%, insbesondere weniger als 0,2 Gew.-%, besonders bevorzugt weniger als 0,05 Gew.-% eines zusätzlichen (neben Verbindung (D)) Hydrophobierungsmittels, jeweils bezogen auf den Bindemittelanteil des Beschichtungsmittels, und ganz besonders bevorzugt gar kein zusätzliches Hydrophobierungsmittel, insbesondere kein zusätzliches Hydrophobierungsmittel auf Fluor-Basis. Hydrophobierungsmittel sind dabei bekanntermaßen solche Additive, die die Oberflächenenergie der resultierenden Beschichtung deutlich erniedrigen, d.h. den Kontaktwinkel mit Wasser der resultierenden gehärteten Beschichtung signifikant vergrößern.

Besonders bevorzugt sind Beschichtungsmittel, die von 25 bis 70 Gew.-%, bezogen auf den Bindemittelanteil des erfindungsgemäßen Beschichtungsmittels, mindestens eines Poly(meth)acrylatpolyols (A) mit einer Hydroxylzahl von 100 bis 300 mg KOH/g und ein Tg von -35°C bis 100°C,
20 bis 50 Gew.-%, bezogen auf den Bindemittelanteil des erfindungsgemäßen Beschichtungsmittels, der Isocyanatgruppen-haltigen Verbindung (B),
0,1 bis 5 Gew.-%, bezogen auf den Bindemittelanteil des erfindungsgemäßen Beschichtungsmittels, mindestens eines Katalysators (C),
0,2 bis 5,0 Gew.-%, bezogen auf den Bindemittelanteil des erfindungsgemäßen Beschichtungsmittels, mindestens eines alkoxysilylfunktionellen Siloxans (D),
0 bis 15 Gew.-%, bezogen auf den Bindemittelanteil des erfindungsgemäßen Beschichtungsmittels, eines oder mehrerer Aminoplastharze und/oder eines oder mehrerer Tris(Alkoxycarbonylamino)Triazine (E), und
0 bis 20 Gew.-%, bezogen auf den Bindemittelanteil des erfindungsgemäßen Beschichtungsmittels, mindestens eines üblichen und bekannten Lackadditivs (F) enthalten, wobei der Feststoffgehalt des Beschichtungsmittels mindestens 45 Gew.-%, besonders bevorzugt mindestens 55 Gew.-%, beträgt.

Innerhalb dieser bevorzugten Ausführungsform sind selbstverständlich alle weiter oben beschriebenen vorteilhaften Varianten, beispielsweise hinsichtlich der Komponenten (A) bis (D) ebenfalls als vorteilhaft anzusehen. Dies gilt für die Kombination der bevorzugten Ausführungsform mit nur einer oder auch mehreren der oben beschriebenen vorteilhaften Varianten.

In einer weiteren Ausführungsform der Erfindung kann das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt. Die Pigmente werden üblicherweise in einer solchen Menge eingesetzt, dass das Pigment-zu-Bindemittel-Verhältnis zwischen 0,05 : 1 und 1,5 : 1 liegt, jeweils bezogen auf den Bindemittelanteil des Beschichtungsmittels.

### Verfahren zur Herstellung von Beschichtungen sowie mit Hilfe des Verfahrens hergestellte Beschichtungen.

Gegenstand der vorliegenden Erfindung ist auch ein Verfahren zur Herstellung von Beschichtungen und mehrschichtigen Beschichtungen unter Einsatz des erfindungsgemäßen Beschichtungsmittels sowie eine mit Hilfe des besagten Verfahrens hergestellte Beschichtung beziehungsweise Mehrschichtbeschichtung.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C, bevorzugt bei einer Temperatur von 60 bis 150°C, während einer Zeit von 1 min bis zu 10 h, wobei bei niedrigen Temperaturen auch längere Härtezeiten zur Anwendung kommen können. Für die Automobilserienlackierung und für die Lackierung von Kunststoffteilen sowie die Lackierung von Nutzfahrzeugen werden dabei üblicherweise Temperaturen angewandt, die bevorzugt zwischen 60 und 150°C liegen. Für die Automobilreparaturlackierung werden dabei üblicherweise niedrigere Temperaturen angewandt, die bevorzugt zwischen 20 und 80°C, insbesondere zwischen 20 und 60°C liegen.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die erfindungsgemäßen Beschichtungsmittel eignen sich hervorragend zur Ausbildung von dekorativen, schützenden, effektgebenden und/oder funktionellen, insbesondere von anschmutzungsresistenten, Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäßen Beschichtungsmittel können daher beispielsweise auf ein ggf. vorbeschichtetes, gefüllertes Metall- oder Kunststoffsubstrat aufgebracht werden, wobei die erfindungsgemäßen Beschichtungsmittel sowohl pigmentiert als auch unpigmentiert sein können, bevorzugt sind sie unpigmentiert und bilden nach Applikation und Aushärten eine Klarlackbeschichtung. Insbesondere werden die erfindungsgemäßen Beschichtungsmitteln und Lackierungen, insbesondere als Klarlackbeschichtungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie zum Beispiel für die Herstellung von Dächern, Heckklappen, Motorhauben, Kotflügeln, Stoßstangen, Spoilern, Schwellern, Schutzleisten, seitlichen Verkleidungen und Ähnliche, sowie der Automobilreparaturlackierung und der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon eingesetzt.

Soll ein Metallsubstrat beschichtet werden, so wird dieses vor der Applikation des Füllers bevorzugt noch mit einer Elektrotauchlackierung beschichtet.

Wird ein Kunststoffsubstrat beschichtet, so wird dieses vor der Applikation des Füllers bevorzugt noch vorbehandelt. Die hierzu am häufigsten angewendeten Verfahren sind das Beflammen, die Plasmabehandlung und die Corona-Entladung.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%.

Unter ASA werden dabei im Allgemeinen schlagzähmodifizierte Styrol/Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmitteln in mehrstufigen Beschichtungsverfahren eingesetzt, insbesondere bei Verfahren, bei dem auf ein gegebenenfalls vorbeschichtetes, gegebenenfalls gefüllertes Substrat zunächst eine oder mehrere pigmentierte Basislackschicht(en) und danach eine Schicht mit dem erfindungsgemäßen Beschichtungsmittel, bevorzugt als Klarlackschicht, aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus dem erfindungsgemäßen Beschichtungsmittel hergestellt worden ist. Bevorzugt werden die erfindungsgemäßen Beschichtungsmitteln zur Herstellung von Klarlackschichten in einem mehrstufigen Beschichtungsverfahren auf dem Gebiet der Automobilserienlackierung (OEM) verwendet.
In dem oben beschrieben mehrstufigen Beschichtungsverfahren können Basislack und Klarlack gemeinsam in einem nass-in-nass Verfahren oder separat gehärtet werden. In einem nass-in-nass Verfahren wird der Klarlack auf eine Basislackschicht oder auf die oberste Basislackschicht, die nicht gehärtet ist, appliziert. Die Härtung erfolgt dann abschließend gemeinsam mit dem Klarlack. Die Härtung kann allerdings auch für jede Basis- oder Klarlackschicht separat erfolgen, also nach jedem Auftrag eines Basislacks und Klarlacks.

Es können sowohl wasserverdünnbare Basislacke als auch Basislacke auf Basis von organischen Lösemitteln eingesetzt werden. Geeignete Basislacke sind beispielsweise in der EP 0 692 007 A1 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur (20°C) bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 20 bis 200°C, bevorzugt von 60 bis 150°C, während einer Zeit von 1 min bis zu 10 h eingebrannt, wobei bei den für die Automobilreparaturlackierung angewandten Temperaturen, die im Allgemeinen zwischen 20 und 80°C, insbesondere zwischen 20 und 60°C liegen, auch längere Härtungszeiten zur Anwendung kommen können.

In einer weiteren bevorzugten Ausführungsform der Erfindung wird das erfindungsgemäße Beschichtungsmittel als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit dem erfindungsgemäßen Beschichtungsmittel aufgetragen werden.

### Die Verwendung der erfindungsgemäßen Beschichtung

Zudem betrifft die vorliegende Erfindung die Verwendung des erfindungsgemäßen Beschichtungsmittels zur Verbesserung der Anschmutzungsresistenz und den (Selbst)reinigungseigenschaften von Beschichtungen, insbesondere von Klarlackbeschichtungen.

Im Rahmen dieser Erfindung wird unter dem Begriff Anschmutzungsresistenz die Eigenschaft einer Beschichtung verstanden, Schmutz abzuweisen. Unter diesen schmutzabweisenden (oft auch als easy-to-clean bezeichneten) Beschichtungen werden im Rahmen der vorliegenden Erfindung wie auch in der Literatur Beschichtungen verstanden, an deren Oberflächen Schmutz, Staub und Verunreinigungen, wie beispielsweise Graffitis, Industrieschmutz, Verkehrsschmutz bis hin zu natürlichen Ablagerungen, nicht oder nur wenig haften und die daher leicht zu reinigen sind.
Des Weiteren ist im Rahmen dieser Erfindung unter dem Begriff der (Selbst)reinigungseigenschaft sowohl die Selbstreinigungseigenschaft als auch die Reinigungseigenschaft einer Oberfläche, hier speziell die Oberfläche einer Beschichtung, zu verstehen. Bei der Selbstreinigung handelt es sich um eine einfache Reinigung einer verschmutzen Oberfläche durch Beregnung, wie sie unter realen Bedingungen zwangsläufig von Zeit zu Zeit auftreten wird. Bei einer tatsächlichen Reinigung werden auch Hilfsmittel wie beispielsweise Bürsten, Schwämmen, (Hoch)druckreiniger oder sonstige übliche Reinigungsutensilien zur Reduzierung der Anschmutzungen eingesetzt.

Im Allgemeinen wird dazu die Oberfläche einer Beschichtung derart ausgestaltet, dass sie unter anderem wasserabweisende Eigenschaften besitzt. Anders formuliert bedeutet das, dass eine geringe Benetzung durch eine möglichst geringe Wechselwirkung zwischen Beschichtungsoberfläche und einwirkendem Wasser auftritt, wodurch ein möglichst großer Kontaktwinkel zwischen einem auf der Oberfläche der Beschichtung liegenden Wassertropfen und der Beschichtungsoberfläche ausgebildet wird. Es wird ein Zustand minimaler Oberfläche und Oberflächenenergie angestrebt.

Dabei ist die Oberflächenenergie (σ) (abgekürzt von Oberflächenenergiedichte, Oberflächenspannung) eine an der Oberfläche wirkende Spannung, die immer bestrebt ist, die Oberfläche zu minimieren. Daher ist die Oberflächenenergie eine flächenbezogene Arbeit und ihre Einheit ist N/m bzw. J/m².

Für einen einfachen Vergleich zweier verschiedener Probenoberflächen kann der jeweilige Randwinkel bestimmt werden. Der Benetzungswinkel bzw. Randwinkel (θ) entsteht zwischen Tropfenrand und Oberfläche, wenn ein Flüssigkeitstropfen auf einer ebenen festen oder flüssigen Oberfläche in einer durch die Schwerkraft leicht verformten Kugelgestalt verharrt. Dies ist ein Zustand minimaler Oberfläche und Oberflächenenergie. Der Randwinkel wird in ° angegeben. Aus dem Randwinkel ist nach der dem Fachmann bekannten Young'schen Gleichung die Oberflächenenergie kalkulierbar (Messmethode siehe Beispiele).

Bevorzugt besitzt die aus dem erfindungsgemäßen Beschichtungsmittel hergestellte Beschichtung eine Oberflächenenergie < 25 mJ/m², ganz besonders bevorzugt < 22,5 mJ/m² und nochmals ganz besonders bevorzugt < 22 mJ/m².

Die Formulierung von Beschichtungsmitteln unter Hinzufügung von Verbindungen zum Herabsetzen der Oberflächenenergie führt oft zu einem qualitativ minderwertigen Erscheinungsbild der daraus resultierenden Beschichtung. Das Erscheinungsbild beziehungsweise der visuelle Eindruck einer Oberfläche umfasst dabei unter anderem Farbe, Glanz, Bildschärfe, Schleier, Oberflächenstruktur, Struktur, Orangenhaut, Nadelstiche und/oder Krater. Insbesondere sind Schleier - eine milchige Trübung (Opaleszenz) - und Krater - kleine, runde Vertiefungen in einer Beschichtung, die nach der Trocknung/Härtung bestehen bleiben - unerwünscht bei Beschichtungen, insbesondere bei Klarlackbeschichtungen. Krater können dabei bis in tiefere Schichten einer Beschichtung oder bis auf das Substrat gehen und werden durch örtlich begrenzte Unregelmäßigkeiten in der Oberflächenspannung der Beschichtung verursacht. Häufigste Ursachen für Schleier und Krater sind die Unverträglichkeit von Komponenten des Beschichtungsmittels (Bindemittel, Additive) mit Stoffen wie kleinen Öltropfen, Partikeln oder Verunreinigungen. Gerade bei Beschichtungsmittel, die zu einer wasserabweisenden Beschichtung führen, ist eine zumindest anteilige Unverträglichkeit mit hydrophoben Bausteinen zu beobachten.

Jedenfalls wird das Erscheinungsbild einer Beschichtung oft getrübt durch eine zumindest anteilige Unverträglichkeit der hinzugefügten Komponenten, wie beispielsweise hydrophob wirkenden fluorhaltigen Komponenten einerseits und dem eingesetzten Bindemittel des Beschichtungsmittels andererseits.

Die Anschmutzungsresistenz sowie die (Selbst)reinigungseigenschaften der aus den erfindungsgemäßen Beschichtungsmitteln hergestellten Beschichtungen wurden durch einen Anschmutzungstest durch Angabe des dem Fachmann bekannten farbmetrischen Helligkeitswerts L* überprüft (Messmethode siehe Beispielteil).
Aus der Veränderung des Helligkeitswerts (L*₁) vor Anschmutzung der Beschichtung zu dem Helligkeitswert nach Anschmutzung (L*₂) bzw. nach Anschmutzung und Reinigung der Beschichtung (L*₃), ist die Anschmutzungsresistenz sowie die (selbst)reinigende Eigenschaft der Beschichtung zu bestimmen. Je kleiner die Veränderung (das Delta, Δ) des Helligkeitswertes (ΔL*), umso geringer ist die Anschmutzung (ΔL*₁₋₂) bzw. umso besser die Reinigung der Oberfläche (ΔL*₁₋₃). Idealerweise würde das ΔL* demnach "null" betragen, wonach Schmutz überhaupt nicht anhaften würde bzw. die Reinigung der Beschichtung den Ursprungswert wieder erreichen würde.
Die Anschmutzungsresistenzen von Beschichtungen, die aus dem erfindungsgemäßen Beschichtungsmittel hergestellt werden können, betragen bevorzugt, ausgedrückt über die Veränderung des Helligkeitswertes L* vor und nach Anschmutzung, ΔL*₁₋₂ < 30, nochmals bevorzugt ΔL*₁₋₂ < 25.
Die (Selbst)reinigungseigenschaften von Beschichtungen, die aus dem erfindungsgemäßen Beschichtungsmittel hergestellt werden können, betragen bevorzugt, ausgedrückt über die Veränderung des Helligkeitswertes L* vor und nach Anschmutzung und Reinigung, ΔL*₁₋₃ < 20, nochmals bevorzugt ΔL*₁₋₃ < 10 und ganz besonders bevorzugt ΔL*₁₋₃ < 5.

### Beispiele

### Messmethoden

### Bestimmung des Feststoffgehalts

Ca. 1 g Probe wird in einem Weißblechdeckel eingewogen. Nach Zugabe von ca. 3 ml Butylacetat wird die Probe im Trockenschrank für 60 Minuten bei 130°C getrocknet, im Exsikkator abgekühlt, und dann zurückgewogen. Der Rückstand entspricht dem Feststoffgehalt.

### Bestimmung des Bindemittelanteils

Unter Bindemittelanteil (auch als Bindemittelgehalt bezeichnet) ist jeweils der in Tetrahydrofuran (THF) lösliche Anteil des Beschichtungsmittels vor der Vernetzung zu verstehen. Dazu wird eine kleine Probe (P) gewogen, in der 50- bis 100-fachen Menge THF gelöst, unlösliche Bestandteile werden abfiltriert, das THF abgedampft und anschließend die Masse der zuvor in THF gelösten Bestandteile bestimmt, indem für 60 Minuten bei 130°C getrocknet wird, im Exsikkator abgekühlt wird und dann erneut gewogen wird. Der Rückstand entspricht dem Bindemittelanteil der Probe (P) und wird in Gew.-% angegeben.

### Glasübergangstemperatur und Vernetzungsdichte

Die Glasübergangstemperatur Tg von einzelnen Bindemittel-Bestandteilen, insbesondere der Hydroxylgruppen-haltigen Verbindung (A), wird im Rahmen der Erfindung experimentell in Anlehnung an DIN 51005 "Thermische Analyse (TA) - Begriffe" und DIN EN ISO 11357-2 "Thermische Analyse - Dynamische Differenzkalorimetrie (DDK)" bestimmt. Dabei wird eine Probe von 10 mg in ein Probenpfännchen eingewogen und in ein DSC-Gerät eingeführt. Es wird auf die Starttemperatur abgekühlt und im Anschluss daran ein 1. und 2. Messdurchgang bei einer Inertgasspülung (N₂) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN EN ISO 11357-2, Punkt 10.1.2, diejenige Temperatur im 2. Messdurchgang bezeichnet, bei der die Hälfte der Änderung der spezifischen Wärmekapazität (0,5 Delta cp) erreicht ist. Sie wird aus dem DDK-Diagramm (Auftragung des Wärmestroms gegen die Temperatur) ermittelt und ist die Temperatur des Schnittpunkts der Mittellinie zwischen den extrapolierten Basislinien vor und nach dem Glasübergang mit der Messkurve.

Die Glasübergangstemperatur und die Vernetzungsdichte einer Beschichtung können, wie dem Fachmann bekannt ist, mit einer Dynamisch-Mechanisch-Thermischen Analyse (DMTA) bestimmt werden (entsprechend der DIN EN ISO 6721-1). Die physikalischen Eigenschaften der Beschichtung stehen dabei im Verhältnis zu der Struktur des vernetzten Netzwerks des Beschichtungsmittels.
Zur Durchführung der Messungen wird ein freier Film benötigt. Dieser wird durch Applikation des Beschichtungsmittels auf einem Polypropylen-Substrat, aus dem nach Einbrennen ein rechteckiges Probenstück mit bekannter Dicke, Länge und Breite entnommen wird, erhalten. Dieser freie Film wird in einem DMTA V der Firma Rheometrics eingespannt und mit einer sinusförmigen Schwingung mit einer Frequenz von 1 Hz und einer Amplitude von 0,2% bei einer Heizrate von 2°C/Minute gemessen. Die Glasübergangstemperatur (Tg) wird im Rahmen dieser Messmethode als Maximum des Verlustfaktors tan δ aus Verlustmodul E" und Speichermodul E', die Vernetzungsdichte als Minimum des Speichermoduls E' bei einer Temperatur oberhalb der Tg angegeben.

### Bestimmung der Oberflächenenergie

Die Oberflächenenergie bzw. Oberflächenspannung von gehärteten Beschichtungen wird bestimmt durch die Ermittlung des Benetzungswinkels. Es werden Flüssigkeiten mit bekannten Oberflächenenergien in definierten Volumina auf die Beschichtung aufgetropft und der Winkel zwischen Flüssigkeit und Festkörperoberfläche mit einem Randwinkelmessgerät DAS 10 der Firma Krüss gemessen. Daraus wird die Oberflächenenergie unter Einbezug der Näherung nach Kaelble berechnet. Das jeweilig anzuwendende Näherungsverfahren ist abhängig von dem Material der zu untersuchenden Probe (der Beschichtung).
Als Messflüssigkeiten wurden 5 µl bi-destilliertes Wasser, 5 µl 1,5-Pentandiol, 1,5 µl Dijodmethan, 5 µl Ethylenglycol und 5 µl Glycerin vorsichtig auf die Beschichtungsoberfläche aufgesetzt und der entstandene Randwinkel nach 10 s erfasst. Die Messungen werden pro Messflüssigkeit 6-mal durchgeführt und der Mittelwert berechnet.

### Anschmutzungs- und (Selbst)reinigungstest

Die Anschmutzungsresistenz und die (Selbst)reinigungseigenschaften der Beschichtung wurden mit einem eigens entwickelten Anschmutzungstest mit einer Testsuspension untersucht. Dazu wurde der farbmetrische Helligkeitswert L* einer Probentafel vor Anschmutzung (L*₁), nach Anschmutzung (L*₂) sowie nach Anschmutzung und Reinigung (L*₃) gemessen. Die Differenz der Helligkeitswerte ΔL* gibt Auskunft über die Anschmutzungsresistenz sowie die Effektivität der (selbst)reinigungseigenschaften der Beschichtung.

Im ersten Schritt wurde der Helligkeitswert L* (L*₁) einer Prüftafel, beschichtet mit einem weißen Basislack und dem zu untersuchenden Klarlack, gemessen. Alle Helligkeitsmessungen wurden mit einem handelsüblichen Spectralphotometer Bykmac i (Messöffnung 23 mm) der Firma BYK i gemessen, wobei der L*-Wert des 45° Winkels zur Datenerhebung verwendet wurde.
Eine Testsuspension bestehend aus 0,5 Gew.-% Carbon black (Fa. Holbein Works), 0,2 Gew.-% Yellow Ochre (Fa. Holbein Works), 1,3 Gew.-% JIS Z 8901 Staub (grade 8) und 98,0 Gew.-% Wasser wurde mit einer Airspray Pistole (Düsenöffnung 1,3 mm, Druckluft 9,8 x 10⁴ Pa, Ausflussrate 70 ± 3 cm³/min, Abstand zur Probe 300 mm) in einem Rundgang (1 Rundgang/s) auf die Probe aufgebracht. Anschließend wurde die Probe in einer Klimakammer 10 min bei 90°C getrocknet. Der Vorgang des Aufsprühens der Testsuspension mit anschließendem Trockenschritt wurde 8 weitere Male durchgeführt, wobei jeweils 5 Rundgänge (1 Rundgang/s) pro Wiederholung durchgeführt wurden. Hiernach wurde der Helligkeitswert L* der verschmutzten Prüftafel erfasst (L*₂).

Mit einem Wasser-Dampfstrahl (Druckluft 9,8 x 10⁶ Pa, Ausflussrate 70 ± 3 cm³/min) wurde die Prüftafel in 10 Rundgängen (1 Rundgang/s) gereinigt und mit Druckluft getrocknet. Der Helligkeitswerts L* wurde erneut gemessen (L*₃).

Die Differenz der Helligkeitswerte ΔL*, die aus den einzelnen farbmetrischen Helligkeitswerten L*₁, L*₂, und L*₃ gebildet werden können, erlaubt einen Vergleich der Anschmutzungsresistenzen (ΔL*₁₋₂) sowie die Effektivitäten der (Selbst)reinigungseigenschaften (ΔL*₁₋₃) der untersuchten Beschichtungen.

### Herstellbeispiel Polyacrylat (A1) und Polyacrylat (A2)

In einem, mittels Ölumlaufthermostat beheizbaren, doppelwandigen 4L Edelstahlkessel, ausgestattet mit Thermometer, Ankerrührer, 2 Tropftrichtern und Rückflusskühler wird ein geeignetes organisches Lösemittel zur Polymerisation vorgelegt. In einem der Tropftrichter wird die Monomerenmischung entsprechend den Angaben in Tabelle 1, in dem zweiten Tropftrichter die Intiatorlösung, enthaltend einen geeigneten Initiator (i.d.R. ein Peroxid), vorgelegt. Die Vorlage wird auf eine Polymerisationstemperatur von 140°C aufgeheizt. Nach Erreichen der Polymerisationstemperatur wird zunächst der Initiatorzulauf gestartet. 15 Minuten nach Beginn des Initiatorzulaufes wird der Monomerenzulauf (Dauer 240 Minuten) gestartet. Der Initiatorzulauf wird so eingestellt, dass er nach Beendigung des Monomerenzulaufs noch weitere 30 Minuten nachläuft. Nach Beendigung des Initiatorzulaufes wird die Mischung für weitere 2h bei 140°C gerührt und anschließend auf Raumtemperatur abgekühlt. Anschließend wird die Reaktionsmischung mit organischem Lösemittel auf den in Tabelle 1 angegebenen Feststoffgehalt eingestellt.

**Tabelle 1: Zusammensetzung und Kennzahlen des Polyacrylats (A1) und Polyacrylats (A2)**

| | **Polyacrylat A1** | **Polyacrylat A2** |
|---|---|---|
| Komponente | Gewichtsteile | Gewichtsteile |
| Styrol | 8,0 | |
| n-Butylmethacrylat | 8,0 | |
| Acrylsäure | 0,6 | |
| 4-Hydroxybutylacrylat | 12,0 | |
| 2-Hydroxyethylacrylat | 12,0 | 22 |
| n-Butylacrylat | 19,0 | |
| Ethyl hexylacrylat | | 38 |
| Feststoffgehalt 1 h 150°C | 65% | 65% |
| Säurezahl [mg KOH/g] | 8-12 | 0-3 |
| OH-Zahl [mg KOH/g] | 175 | 175 |
| Tg [°C]¹⁾ | -13 | -45 |

| | | |
|---|---|---|
| Erläuterungen zu Tabelle 1: ¹⁾ Die Glasübergangstemperatur Tg wurde mittels der oben beschriebenen DSC-Messungen nach DIN EN ISO 11357-2 gemessen. | | |

### Herstellbeispiel der Stammlacke (S1) und (S2)

Zur Herstellung der Stammlacke (S1) und (S2) werden die in Tabelle 2 aufgeführten Komponenten in der vorgegebenen Reihenfolge in einem geeigneten Gefäß eingewogen und innig miteinander verrührt.

**Tabelle 2: Zusammensetzung der Stammlacke (S1) und (S2)**

| | **Stammlack S1** | **Stammlack S2** |
|---|---|---|
| Komponente | Gewichtsteile | Gewichtsteile |
| Polyacrylat A1 | 75 | 40 |
| Polyacrylat A2 | | 35 |
| Tinuvin 384¹⁾ | 1,5 | 1,5 |
| Tinuvin 292²⁾ | 1,5 | 1,5 |
| Byk 325³⁾ | 0,2 | 0,2 |
| Butylacetat | 19,5 | 19,5 |
| Nacure 4167⁴⁾ | 2,3 | 2,3 |

| | | |
|---|---|---|
| Erläuterungen zu Tabelle 2: ¹⁾ Tinuvin® 384 = handelsübliches Lichtschutzmittel auf Basis eines Benztriazols, Firma BASF S.E. ²⁾ Tinuvin® 292 = handelsübliches Lichtschutzmittel auf Basis eines sterisch gehinderten Amins, Firma BASF S.E. ³⁾ Byk 325 = handelsübliches, polyethermodifiziertes Polymethylalkylsiloxan, Firma Byk Chemie ⁴⁾ Nacure® 4167 = handelsüblicher Katalysator auf Basis eines Amin-blockierten Phosphorsäureteilesters, Firma King Industries, nicht flüchtiger Anteil 25% | | |

### Herstellbeispiel der Härter (H1) bis (H4)

Die nachfolgende Vorschrift gilt für die Herstellung der Härter (H1) bis (H4). Sie wird in Anlehnung an die Vorschrift aus der WO2012/168014 A1, S. 32, Z. 4-27 hier explizit für den Härter (H1) ausgeführt. Die entsprechenden Anteilsverhältnisse und Komponenten für die Härter (H2) bis (H4) sind der Tabelle 3 zu entnehmen.

In einem Reaktionsgefäß werden 39 Gewichtsteile trimerisiertes Hexamethyl-1,6-diisocyanat (Desmodur® N3300, Fa. Covestro) und 36 Gewichtsteile Butylacetat vorgelegt. Unter Rückflusskühlung, Stickstoffüberschleierung und Rühren wird eine Mischung aus 2,0 Gewichtsteilen N-[3-(trimethoxysilyl)propyl]butylamin (Dynasylan® 1189, Fa. Evonik) und 20 Gewichtsteilen Bis-[3-(trimethoxysilyl)propyl]amin (Dynasylan® 1124, Fa. Evonik) so zugetropft, dass eine Temperatur von 50-60°C nicht überschritten wird. Das Reaktionsgemisch wird gerührt, bis der mittels Titration ermittelte NCO-Wert den für eine komplette Umsetzung der Silangruppen-haltigen Amine theoretisch errechneten NCO-Wert von 5,9 Gew.-% erreicht hat. Anschließend werden 3,0 Gewichtsteile trimerisiertes Isophorondiisocyanat (Desmodur® Z4470, 70%ig in Solventnaphta, Fa. Covestro) zugegeben. Das so erhaltene Gemisch weist einen NCO-Wert von 6,1 Gew.-% und einen theoretischen Feststoffgehalt von 63 Gew.-% auf.

**Tabelle 3: Zusammensetzung der Härter (H1) bis (H4)**

| | **Härter (H1)** | **Härter (H2)** | **Härter (H3)** | **Härter (H4)** |
|---|---|---|---|---|
| Komponente | Gewichtsteile | | | |
| Desmodur® N3300 | 39 | 26 | 25 | 41 |
| Butylacetat | 36 | 6 | 7 | 36 |
| Dynasylan® 1189 | 2 | | | 2 |
| Dynasylan® 1124 | 20 | | | 20 |
| Desmodur® Z4470 | 3 | | 3 | |
| | | | | |
| NCO-Wert (Gew.-%) | 6,1 | 17,7 | 16,6 | 6,2 |
| Feststoffgehalt (theoretisch) (Gew.-%) | 63 | 81,3 | 77,4 | 63,6 |

### Formulierung des erfindungsgemäßen Beschichtungsmittels EB1 und der Vergleichs-Beschichtungsmittel VB1 bis VB11 sowie der daraus hergestellten Beschichtungen des erfindungsgemäßen Beispiels E1 und der Vergleichsbeispiele V1 bis V11.

Zur Herstellung der Beschichtungsmittel werden Stammlack (S1) oder (S2), mit oder ohne Zugabe des erfindungsgemäß einzusetzenden alkoxysilylfunktionellen Siloxans (D) oder eines Vergleichs-Siloxans (hydroxyfunktionelles Siloxan), mit einem der Härter (H1) bis (H4) 1:1 (m:m) in einem geeigneten Gefäß innig verrührt.
Durch geeignete Kombination von Stammlack (S1) oder (S2) mit einem der Härter (H1) bis (H4) werden aus den entsprechenden Beschichtungsmitteln EB1 und VB1 bis VB11 Beschichtungen mit einer hohen beziehungsweise niedrigen Vernetzungsdichte und hoher beziehungsweise niedriger Tg erhalten. Das erfindungsgemäße Beschichtungsmittel EB1, hergestellt aus Stammlack (S1) und Härter (H1) unter Zuführung eines alkoxysilylfunktionellen Siloxans zu dem Stammlack (S1), besitzt eine hohe Vernetzungsdichte und eine hohe Tg. Die Zusammensetzungen der Beschichtungsmittel sind in Tabelle 4 dargestellt.

**Tabelle 4: Zusammensetzung der Beschichtungsmittel EB1 und VB1 bis VB11 sowie Angaben bezüglich Glasübergangstemperatur (Tg) und Vernetzungsdichte der aus den Beschichtungsmitteln hergestellten Beschichtungen E1 und V1 bis V11.**

| **Komponente** | **Stammlack** | **KR-410¹⁾** | **KF-6000²⁾** | **Härter** | **Tg (°C)³⁾** | **Vernetzungsdichte (Pa) *10^7⁴⁾** |
|---|---|---|---|---|---|---|
| **Hoher Tg, hohe Vernetzungsdichte:** | | | | | | |
| **VB1** | S1 | | | H1 | 83 | 4,9 |
| **EB1** | S1 | 0,5 | | H1 | 83 | 4,9 |
| **VB2** | S1 | | 0,5 | H1 | 83 | 4,9 |

| **Niedriger Tg, niedrige Vernetzungsdichte:** | | | | | | |
|---|---|---|---|---|---|---|
| **VB3** | S2 | | | H2 | 59 | 2,0 |
| **VB4** | S2 | 0,5 | | H2 | 59 | 2,0 |
| **VB5** | S2 | | 0,5 | H2 | 59 | 2,0 |

| **Hoher Tg, niedrige Vernetzungsdichte:** | | | | | | |
|---|---|---|---|---|---|---|
| **VB6** | S1 | | | H3 | 79 | 2,0 |
| **VB7** | S1 | 0,5 | | H3 | 79 | 2,0 |
| **VB8** | S1 | | 0,5 | H3 | 79 | 2,0 |

| **Niedriger Tg, hohe Vernetzungsdichte:** | | | | | | |
|---|---|---|---|---|---|---|
| **VB9** | S2 | | | H4 | 62 | 5,2 |
| **VB10** | S2 | 0,5 | | H4 | 62 | 5,2 |
| **VB11** | S2 | | 0,5 | H4 | 62 | 5,2 |

| | | | | | | |
|---|---|---|---|---|---|---|
| Erläuterungen zu Tabelle 4: ¹⁾ KR-410 = lineares alkoxysilylfunktionelles Siloxan, Firma Shin-Etsu ²⁾ KF-6000 = lineares hydroxyfunktionelles Siloxan, Firma Shin-Etsu ³⁾ Tg = Glasübergangstemperatur, gemessen mit Hilfe von DSC-Messungen nach DIN-EN-ISO 11357-2 ⁴⁾ Vernetzungsdichte, gemessen mittels XLD. Angegebener Wert entspricht E'min. | | | | | | |

Die Beschichtungen der Beispiele E1 und V1 bis V11 werden aus den Beschichtungsmitteln EB1 und VB1 bis VB11 durch Applikation mit einer Fließbecherpistole auf Bonderblechen von 40 x 40 cm, welche mit einem schwarzen gehärteten Wasserbasislack vorbeschichtet sind, nach Einbrennen für 20 Minuten bei 140°C in einer Trockenzielschichtdicke von 35-45 µm erhalten.

Die Oberfläche der Beschichtungen wurde durch Messung des Glanzes bei einem Winkel von 20° mit einem handelsüblichen Glanzgerät und durch visuelle Prüfung auf Fehlstellen (zum Beispiel Krater) und Aussehen hin beurteilt.

Die Kratzfestigkeit der trockenen Oberflächen der resultierenden Beschichtungen wurde mit Hilfe des Crockmeter-Tests, in Anlehnung an EN ISO 105-X12 mit 10 Doppelhüben und 9N Auflagekraft unter Verwendung von 9 µm Schleifpapier (3M™ Wetordry™ 281Q) unter anschließender Bestimmung des Restglanzes bei 20° mit einem handelsüblichen Glanzgerät, ohne Reflow, bestimmt.

Die Widerstandsfähigkeit einer Beschichtung gegen Rissbildung und/oder Ablösen von einem metallischen Substrat wird durch eine Tiefenprüfung nach DIN EN ISO 1520 bestimmt, sie stellt damit ebenfalls ein Maß für die Flexibilität der Beschichtung dar. Die Eindringtiefe wird dabei in mm angegeben und sollte im OEM Bereich oberhalb von 6 mm liegen.

Die Anschmutzungsresistenz und die (Selbst)reinigungseigenschaften sowie die Oberflächenenergie der Beschichtungen wurden wie weiter oben beschrieben bestimmt. Angegeben werden hier die Änderung des farbmetrischen Helligkeitswerts L*₁ vor Anschmutzung gegenüber dem Helligkeitswert L*₂ nach Anschmutzung (ΔL*₁-2) und die Änderung des farbmetrischen Helligkeitswerts L*₁ vor Anschmutzung gegenüber der mit einem Dampfstrahl nach vorheriger Anschmutzung gereinigten Beschichtung L*₃(ΔL*₁₋₃).

Die Ergebnisse der Überprüfungen der Beschichtungen E1 und V1 bis V11 sind in Tabelle 5 aufgeführt.

**Tabelle 5: Ergebnisse der Kratzbeständigkeit, der Tiefung, der Anschmutzungs- und (Selbst)reinigungseigenschaften sowie der Oberflächenenergie der Beschichtungen E1 und V1 bis V11.**

| **Bsp.** | **Krater / Oberflächenstörungen** | **Glanz 20°** | **Restglanz 20° (%)** | **Tiefung (mm)** | **ΔL*₁₋₂** | **ΔL*₁₋₃** | **Oberflächenenergie (mJ/m²)** |
|---|---|---|---|---|---|---|---|
| **Hohe Tg, hohe Vernetzungsdichte:** | | | | | | | |
| **V1** | OK | 88 | 73 | 6,3 | 41,3 | 5,0 | 39,1 |
| **E1** | OK | 86 | 77 | 6,6 | 22,9 | -0,7 | 21,0 |
| **V2** | OK | 86 | 71 | 6,6 | 27,6 | 1,8 | 23,3 |

| **niedrige Tg, niedrige Vernetzungsdichte:** | | | | | | | |
|---|---|---|---|---|---|---|---|
| **V3** | OK | 87 | 40 | 7,7 | 83,4 | 13,3 | 37,5 |
| **V4** | OK | 85 | 44 | 7,5 | 70,9 | 3,9 | 20,3 |
| **V5** | OK | 87 | 39 | 7,6 | 68,3 | 9,6 | 22,6 |

| **Hohe Tg, niedrige Vernetzungsdichte:** | | | | | | | |
|---|---|---|---|---|---|---|---|
| **V6** | OK | 88 | 35 | 7,2 | 53,8 | 3,9 | 41,6 |
| **V7** | OK | 85 | 40 | 7,0 | 48,3 | 1,6 | 22,4 |
| **V8** | OK | 86 | 34 | 7,0 | 75,9 | 4,9 | 24,0 |

| **Niedrige Tg, hohe Vernetzungsdichte:** | | | | | | | |
|---|---|---|---|---|---|---|---|
| **V9** | OK | 89 | 77 | 6,4 | 75,2 | 5,2 | 38,7 |
| **V10** | OK | 87 | 78 | 6,6 | 57,6 | 0,1 | 20,9 |
| **V11** | OK | 87 | 75 | 6,4 | 58,3 | 3,7 | 27,2 |

Zusätzlich wurden die Anschmutzungsresistenz und die (Selbst)reinigungseigenschaften sowie die Oberflächenenergie der Beispiele mit hohem Tg und hoher Vernetzungsdichte (E1, V1 und V2) nach Bewitterungsbelastung untersucht. Dazu wurden die Probentafeln mit den Beschichtungen E1, V1 und V2 in einer Direktauslage (Freibewitterung) unter einem Winkel von 5° über 4 Monate der Witterung ausgesetzt. Anschließend wurden die Untersuchungen hinsichtlich Anschmutzungsresistenz, (Selbst)reinigung und Oberflächenenergie für diese Probentafeln nochmals durchgeführt. Die Ergebnisse sind in Tabelle 6 dargestellt.

**Tabelle 6: Ergebnisse der Anschmutzungs- und (Selbst)reinigungseigenschaften sowie der Oberflächenenergie der Beschichtungen E1, V1 und V2 nach 4-monatiger Freibewitterung.**

| **Bsp.** | **ΔL*₁₋₂** | **ΔL*₁₋₃** | **Oberflächenenergie (mJ/m²)** |
|---|---|---|---|
| **V1** | 54,7 | 10,0 | 41,3 |
| **E1** | 38,9 | 6,1 | 26,1 |
| **V2** | 52,7 | 8,9 | 39,2 |

Die Ergebnisse untermauern, dass lediglich das erfindungsgemäße Beschichtungsmittel EB1 zu einer Beschichtung E1 führt, die eine ausgezeichnete Anschmutzungsresistenz, gute (Selbst)reinigungseigenschaften, auch nach Bewitterungsbelastung, sowie eine gute Flexibilität besitzt, ohne dass die Kratzbeständigkeit oder der visuelle Eindruck der Beschichtung leidet.

Überraschenderweise wurde gefunden, dass ein allgemeines Herabsetzen der Oberflächenenergie nicht genügt, um die ausgezeichneten Anschmutzungsresistenzen der Beschichtung E1, auch nach Bewitterungsbelastung, zu erhalten. Denn, wie die Anschmutzungsresistenzen der Vergleichs-Beschichtungen V4, V7, V10 mit alkoxysilylfunktionellem Siloxan oder den Vergleichs-Beschichtungen V2, V5, V8 und V11 mit hydroxyfunktionellem Siloxan demonstrieren, genügt das alleinige Herabsetzen der Oberflächenenergie der Beschichtung nicht, um die ausgezeichneten Anschmutzungsresistenzen und (Selbst)reinigungseigenschaften der Beschichtung E1 zu erhalten.

Bei Betrachtung der Anschmutzungsresistenzen, also beim Vergleich der Helligkeitswerte L* vor und nach Anschmutzung (ΔL*₁₋₂), zeigt sich ein deutlich besseres Verhalten der mit alkoxysilylfunktionellen Siloxanen modifizierten Beschichtungen (Tabelle 5, E1, V4, V7, V10) gegenüber den mit hydroxyfunktionellen Siloxanen modifizierten Beschichtungen (Tabelle 5, V2, V5, V8, V11) und insbesondere gegenüber nicht modifizierten Beschichtungen (Tabelle 5, V1, V3, V6, V9).

Es zeigt sich weiter, dass lediglich eine hohe Vernetzungsdichte und eine hohe Tg mit oder ohne Hinzufügung eines nicht-erfindungsgemäßen Siloxans nicht ausreicht, um die ausgezeichneten Ergebnisse des erfindungsgemäßen Beispiels zu erzielen (Vergleiche Beispiel E1 mit V1 und V2, Tabelle 5, Tabelle 6).

Über alle Beispiele hinweg zeigt sich also, dass nur die Kombination von Zugabe eines alkoxysilylfunktionellen Siloxans und eines ausreichend hohen Anteils von Bindemitteln mit hoher Tg zu Beschichtungsmitteln zu Beschichtungen führt, die neben den Erhalt von grundsätzlich an Klarlacke gestellte Anforderungen auch eine ausgezeichneten Anschmutzungsresistenz besitzen.

Die (Selbst)reinigungseigenschaften der Beschichtung E1, ausgedrückt über den Wert (ΔL*₁₋₃), sind ebenfalls ausgezeichnet, wobei ebenfalls sehr gute Ergebnisse mit Beschichtungen erzielt wurden, die einen hohen Tg und niedrige Vernetzungsdichte oder einen niedrigen Tg mit hoher Vernetzungsdichte besitzen (Vgl. Tabelle 5, V7 und V10). Jedoch zeigen diese Beschichtungen deutlich verbesserungswürdige Anschmutzungsresistenzen. Im erfindungsgemäßen Beispiel E1 ist die Differenz der Helligkeit vor und nach Reinigung (ΔL*₁₋₃) sogar negativ, was eine höhere Helligkeit der Probentafel nach der Reinigung andeuten würde als vor Anschmutzung. Diese Differenz kann auf eine leichte Verschmutzung der Probetafel, beispielsweise durch Staub oder Fingerabrücke, vor der gezielt durchgeführten Anschmutzung der Probentafel hindeuten.

Nur die erfindungsgemäße Beschichtung E1 behält auch nach Bewitterungsbelastung eine ausgezeichnete Anschmutzungsresistenz und gute (Selbst)reinigungseigenschaften, die zwar etwas geringer ausfallen als vor der Bewitterungsbelastung, jedoch qualitativ noch deutlich, gerade bei der Anschmutzung, vor den Vergleichs-Beschichtungen liegen. Dagegen sind die vorteilhaften Eigenschaften des nicht-erfindungsgemäßen, hydroxyfunktionellen Siloxans hinsichtlich Anschmutzungsresistenz und (Selbst)reinigung gegenüber nichtmodifizierten Beschichtungen nach Bewitterungsbelastung verwirkt (Vergleiche Tabelle 6, V1 und V2).

## Patentansprüche

1. Nichtwässriges Beschichtungsmittel enthaltend:
(A) mindestens eine Hydroxylgruppen-haltige Verbindung (A) mit einer Hydroxylzahl von 100 bis 400 mg KOH/g und einer Tg > -35°C, gemessen gemäß der Beschreibung, welche zu mindestens 25 Gew.-%, bezogen auf den Bindemittelanteil des Beschichtungsmittels, enthalten ist,
(B) mindestens eine Isocyanatgruppen-haltige Verbindung (B) mit freien oder blockierten Isocyanatgruppen, wobei die Komponente (B) mindestens eine Struktureinheit der Formel (I)
-NR-(X-SiR"ₓ(OR')₃₋ₓ) (I),
und/oder mindestens eine Struktureinheit der Formel (II)
-N(X-SiR"ₓ(OR')₃₋ₓ)ₙ(X'-SiR"_{y}(OR')_{3-y})ₘ (II),
mit
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann,
X, X' = linearer und/oder verzweigter Alkylen oder Cycloalkylenrest mit 1 bis 20 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann,
n = 0 bis 2, m = 0 bis 2, m+n = 2 sowie x, y = 0 bis 2,
und
(C) mindestens einen Katalysator (C) für die Vernetzung von Silangruppen,
**gekennzeichnet dadurch, dass** zudem
(D) mindestens ein alkoxysilylfunktionelles Siloxan der Formel (III)
R¹-SiR²₂-Aₓ-B_{y}-O-SiR³₂-R⁴ (III)
worin
A eine Gruppe -[O-SiR⁵₂]- und B eine Gruppe -[O-SiR⁶R⁷]- ist,
R², R³, R⁵, und R⁶ unabhängig voneinander lineare oder verzweigte Alkylgruppen mit 1 bis 4 Kohlenstoffatomen sind,
R¹, R⁴, und R⁷ unabhängig voneinander eine Gruppe -L-R⁸ sind,
worin L = eine lineare oder verzweigte 2-bindige Alkylgruppe und
R⁸ = H oder -Si(R⁹)_{z}(OR¹⁰)_{3-z} mit R⁹, R¹⁰ = eine lineare oder verzweigte Alkylgruppe mit 1-4 Kohlenstoffatomen und z = 0, 1, oder 2, bevorzugt z = 0, ist, mit der Vorgabe, das mindestens einer der Reste R¹ oder R⁴ und/oder mindestens eine Gruppe B eine Gruppe R⁸ = -Si(R⁹)_{z}(OR¹⁰)_{3-z} beinhaltet,
x unabhängig für eine ganze Zahl von 1-20 steht,
y unabhängig für eine ganze Zahl von 0-10 steht,
wobei bevorzugt x+y ≤ 20 ist,
enthalten ist.

2. Beschichtungsmittel nach Anspruch 1, **dadurch gekennzeichnet, dass** es ein zwei-komponenten Beschichtungsmittel ist und das alkoxysilylfunktionelle Siloxan (D) in der Beschichtungsmittelkomponente, die die Verbindung (A) enthält, enthalten ist.

3. Beschichtungsmittel nach einem der Ansprüche 1 bis 2, **dadurch gekennzeichnet, dass** R², R³ und R⁵ unabhängig voneinander ein Methyl und/oder Ethyl, bevorzugt ein Methyl, ist,
R¹ und R⁴ unabhängig voneinander eine Gruppe -L-R⁸, worin L= eine lineare oder verzweigte 2-bindige Alkylgruppe, bevorzugt Ethylen, und R⁸= -Si(R⁹)_{z}(OR¹⁰)_{3-z} mit R⁹, R¹⁰= eine lineare oder verzweigte Alkylgruppe mit 1-4 Kohlenstoffatomen und z= 0, 1, oder 2, bevorzugt z= 0, sind
und y= 0, ist.

4. Beschichtungsmittel nach einem der Ansprüche 1 bis 3, **dadurch gekennzeichnet, dass** keine fluorhaltigen Verbindungen enthalten sind, die zu einer Hydrophobierung der aus ihr resultierenden Beschichtung führen.

5. Beschichtungsmittel nach einem der Ansprüche 1 bis 4, **dadurch gekennzeichnet, dass** als Polyhydroxylgruppen-haltige Verbindung (A) mindestens ein Poly(meth)acrylatharz mit einer OH-Zahl von 100 bis 300 mg KOH/g, bevorzugt von 150 bis 200 mg KOH/g, und eine Glasübergangstemperatur von -35 bis 100 °C, insbesondere von -35 bis 20 °C, (gemessen mittels DSC-Messungen nach DIN-EN-ISO 11357-2) enthalten ist.

6. Beschichtungsmittel nach einem der Ansprüche 1 bis 5, **dadurch gekennzeichnet, dass** das Beschichtungsmittel mindestens einen phosphor- und stickstoffhaltigen Katalysator (C) enthält.

7. Beschichtungsmittel nach einem der Ansprüche 1 bis 6, **dadurch gekennzeichnet, dass** die Verbindung (B) dadurch hergestellt worden ist, dass Polyisocyanate und/oder deren Isocyanurat- Trimere und/oder deren Allophanat-Dimere und/oder deren Biuret-Dimere und/oder deren Uretdion-Dimere mit mindestens einer Verbindung der Formel (la)
H-NR-(X-SiR"ₓ(OR')₃₋ₓ) (la)
und/oder mit mindestens einer Verbindung der Formel (IIa)
HN(X-SiR"ₓ(OR')₃₋ₓ)ₙ(X'-SiR"_{y}(OR')_{3-y})ₘ (IIa),
umgesetzt worden sind, wobei die Substituenten die in Anspruch 1 genannte Bedeutung haben.

8. Verfahren zur Herstellung von Beschichtungen bei dem auf ein gegebenenfalls vorbeschichtetes Substrat ein Beschichtungsmittel nach einem der Ansprüche 1 bis 7 aufgebracht wird.

9. Verfahren nach Anspruch 8, **dadurch gekennzeichnet, dass** es zur Herstellung einer Beschichtung, insbesondere einer Klarlack-Beschichtung, für die Automobilserienlackierung, die Lackierung von Automobil-Anbauteilen und/oder Nutzfahrzeugen und die Autoreparaturlackierung, eingesetzt wird.

10. Verfahren nach einem der Ansprüche 8 oder 9, **dadurch gekennzeichnet, dass** auf ein gegebenenfalls vorbehandeltes und gegebenenfalls vorbeschichtetes Substrat ein pigmentierter Basislack und danach ein Beschichtungsmittel nach einem der Ansprüche 1 bis 8 aufgetragen werden.

11. Verfahren nach einem der Ansprüche 8 bis 10, **dadurch gekennzeichnet, dass** nach Auftrag der pigmentierten Basislackschicht der aufgebrachte Basislack zunächst bei Temperaturen von 20 bis 80°C getrocknet wird und nach dem Auftrag des Beschichtungsmittels nach einem der Ansprüche 1 bis 7 bei Temperaturen von 20 bis 200°C, bevorzugt von 60 bis 150°C, während einer Zeit von einer Minute bis zu 10 Stunden gehärtet wird.

12. Verwendung eines Beschichtungsmittels gemäß einem der Ansprüche 1 bis 7 zur Verbesserung der Anschmutzungsresistenz und den (Selbst)reinigungseigenschaften von Beschichtungen, insbesondere von Klarlackbeschichtungen.

13. Beschichtung, herstellbar nach einem Verfahren nach einem der Ansprüche 8 bis 11.

14. Beschichtung nach Anspruch 13, **dadurch gekennzeichnet, dass** sie eine Glasübergangstemperatur (Tg) > 70°C und eine Vernetzungsdichte > 3,0x10⁷ Pa besitzt.

15. Beschichtung gemäß Anspruch 13 oder 14, **dadurch gekennzeichnet, dass** sie eine Anschmutzungsresistenz von ΔL*₁₋₂ < 30, bevorzugt ΔL*₁₋₂ < 25, besitzt, wobei ΔL*₁₋₂ die Differenz des farbmetrischen Helligkeitswerts L* vor (L*₁) und nach Anschmutzung (L*₂) einer Probentafel definiert, auf der ein Beschichtungsmittel nach einem der Ansprüche 1 bis 7 aufgetragen und gehärtet wurde.

16. Effekt- und/oder farbgebende mehrschichtige Beschichtung umfassend mindestens eine pigmentierte Basislackschicht und mindestens eine darauf angeordnete Klarlackschicht, **dadurch gekennzeichnet, dass** die Klarlackschicht aus einem Beschichtungsmittel nach einem der Ansprüche 1 bis 7 hergestellt worden ist.

## Claims

1. Nonaqueous coating composition comprising
(A) at least one hydroxyl group-containing compound (A) having a hydroxyl number of 100 to 400 mg KOH/g and a Tg > -35°C, measured according to the description, which is present at not less than 25 wt%, based on the binder fraction of the coating composition,
(B) at least one isocyanate group-containing compound (B) having free or blocked isocyanate groups, component (B) comprising at least one structural unit of the formula (I)
-NR-(X-SiR"ₓ(OR')₃₋ₓ) (I),
and/or at least one structural unit of the formula (II)
-N(X-SiR''ₓ(OR')₃₋ₓ)ₙ(X'-SiR''_{y}(OR')_{3-y})ₘ (II),
where
R = hydrogen, alkyl, cycloalkyl, aryl, or aralkyl, it being possible for the carbon chain to be interrupted by nonadjacent oxygen, sulfur, or NRa groups, with Ra = alkyl, cycloalkyl, aryl, or aralkyl,
R' = hydrogen, alkyl, or cycloalkyl, it being possible for the carbon chain to be interrupted by nonadjacent oxygen, sulfur, or NRa groups,
X, X' = linear and/or branched alkylene or cycloalkylene radical having 1 to 20 carbon atoms,
R'' = alkyl, cycloalkyl, aryl, or aralkyl, it being possible for the carbon chain to be interrupted by nonadjacent oxygen, sulfur, or NRa groups,
n = 0 to 2, m = 0 to 2, m + n = 2, and x, y = 0 to 2,
and
(C) at least one catalyst (C) for the crosslinking of silane groups,
**characterized in that** additionally there is
(D) at least one alkoxysilyl-functional siloxane of the formula (III)
R¹-SiR²₂-Aₓ-B_{y}-O-SiR³₂-R⁴ (III)
in which
A is a group -[O-SiR⁵_{2]}- and B is a group -[O-SiR⁶R⁷]-,
R², R³, R⁵, and R⁶ independently of one another are linear or branched alkyl groups having 1 to 4 carbon atoms,
R¹, R⁴, and R⁷ independently of one another are a group -L-R⁸,
in which L = a linear or branched divalent alkyl group and
R⁸ = H or -Si (R⁹)_{z}(OR¹⁰)_{3-z} with R⁹, R¹⁰ = a linear or branched alkyl group having 1-4 carbon atoms and z = 0, 1, or 2, preferably z = 0,
with the proviso that at least one of the radicals R¹ or R⁴ and/or at least one group B constitutes a group R⁸ = -Si (R⁹)_{z}(OR¹⁰)_{3-z},
x independently is an integer of 1-20,
y independently is an integer of 0-10,
and preferably x + y ≤ 20.

2. Coating composition according to Claim 1, **characterized in that** it is a two-component coating composition comprising the alkoxysilyl-functional siloxane (D) in the coating component which comprises the compound (A).

3. Coating composition according to either of Claims 1 and 2, **characterized in that** R², R³, and R⁵ independently of one another are a methyl and/or ethyl, preferably a methyl,
R¹ and R⁴ independently of one another are a group -L-R⁸, in which L = a linear or branched divalent alkyl group, preferably ethylene, and R⁸ = -Si(R⁹)_{z}(OR¹⁰)_{3-z} with R⁹, R¹⁰ = a linear or branched alkyl group having 1-4 carbon atoms and z = 0, 1, or 2, preferably z = 0,
and y = 0.

4. Coating composition according to any of Claims 1 to 3, **characterized in that** it contains no fluorine-containing compounds which lead to hydrophobation of the coating resulting therefrom.

5. Coating composition according to any of Claims 1 to 4, **characterized in that** it comprises as polyhydroxyl group-containing compound (A) at least one poly(meth)acrylate resin having an OH number of 100 to 300 mg KOH/g, preferably of 150 to 200 mg KOH/g, and a glass transition temperature of -35 to 100°C, more particularly of -35 to 20°C, (measured by means of DSC measurements in accordance with DIN EN ISO 11357-2) .

6. Coating composition according to any of Claims 1 to 5, **characterized in that** the coating composition comprises at least one phosphorus- and nitrogen-containing catalyst (C).

7. Coating composition according to any of Claims 1 to 6, **characterized in that** the compound (B) has been prepared by reacting polyisocyanates and/or their isocyanurate trimers and/or their allophanate dimers and/or their biuret dimers and/or uretdione dimers with at least one compound of the formula (Ia)
H-NR-(X-SiR''ₓ(OR')₃₋ₓ) (Ia)
and/or at least one compound of the formula (IIa)
HN(X-SiR''ₓ(OR')₃₋ₓ),(X'-SiR''_{y}(OR')_{3-y})ₘ (IIa),
where the substituents have the definition stated in Claim 1.

8. Method for producing coatings by applying to an optionally precoated substrate a coating composition according to any of Claims 1 to 7.

9. Method according to Claim 8, **characterized in that** it is used for producing a coating, more particularly a clearcoat coating, for automotive OEM finishing, the finishing of parts for installation in or on automobiles, and/or the finishing of commercial vehicles, and automotive refinishing.

10. Method according to either of Claims 8 and 9, **characterized in that** a pigmented basecoat material and thereafter a coating composition according to any of Claims 1 to 8 are applied to an optionally pretreated and optionally precoated substrate.

11. Method according to any of Claims 8 to 10, **characterized in that** following application of the pigmented basecoat, the applied basecoat material is first dried at temperatures of 20 to 80°C and, following application of the coating composition according to any of claims 1 to 7, is cured at temperatures of 20 to 200°C, preferably of 60 to 150°C, during a time of one minute up to 10 hours.

12. Use of a coating composition according to any of Claims 1 to 7 for improving the soiling resistance and the (self-)cleaning properties of coatings, especially of clearcoat coatings.

13. Coating producible by a method according to any of Claims 8 to 11.

14. Coating according to Claim 13, **characterized in that** it possesses a glass transition temperature (Tg) > 70°C and a crosslinking density > 3.0 × 10⁷ Pa.

15. Coating according to Claim 13 or 14, **characterized in that** it possesses a soiling resistance of ΔL*₁₋₂ < 30, preferably ΔL*₁₋₂ < 25, where ΔL*₁₋₂ defines the difference in the colorimetric lightness L* before (L*₁) and after (L*₂) soiling of a sample panel on which a coating composition according to any of Claims 1 to 7 has been applied and cured.

16. Multicoat effect and/or color coating comprising at least one pigmented basecoat and at least one clearcoat disposed thereon, **characterized in that** the clearcoat has been produced from a coating composition according to any of Claims 1 to 7.

## Revendications

1. Agent de revêtement non aqueux contenant :
(A) au moins un composé (A) contenant des groupes hydroxyle, doté d'un indice d'hydroxyle de 100 à 400 mg de KOH/g et une Tv > -35 °C, mesurée selon la description, qui est contenu à raison d'au moins 25 % en poids, par rapport à la part de liant de l'agent de revêtement,
(B) au moins un composé (B) contenant des groupes isocyanate, doté de groupes isocyanate libres ou bloqués, le composant (B) contenant au moins un motif structural de formule (I)
-**NR-(X-SiR"ₓ(OR')₃₋ₓ)** **(I),**
et/ou au moins un motif structural de formule (II)
**-N(X-SiR"ₓ(OR')₃₋ₓ)ₙ(X'-SiR"_{y}(OR')_{3-y})ₘ** **(II),**
avec
R = hydrogène, alkyle, cycloalkyle, aryle ou aralkyle, la chaîne carbonée pouvant être interrompue par des groupes oxygène, soufre ou NRa non adjacents, dans lequel Ra = alkyle, cycloalkyle, aryle ou aralkyle,
R' = hydrogène, alkyle ou cycloalkyle, la chaîne carbonée pouvant être interrompue par des groupes oxygène, soufre ou NRa non adjacents,
X, X' = radical alkylène linéaire et/ou ramifié ou cycloalkylène comportant 1 à 20 atomes de carbone,
R" = alkyle, cycloalkyle, aryle, ou aralkyle, la chaîne carbonée pouvant être interrompue par des groupes oxygène, soufre ou NRa non adjacents,
n = 0 à 2, m = 0 à 2, m + n = 2 ainsi que x, y = 0 à 2,
et
(C) au moins un catalyseur (C) pour la réticulation de groupes silane,
**caractérisé en ce qu'**en outre
(D) au moins un siloxane à fonctionnalité alcoxysilyle de formule (III)
**R¹-SiR²₂-Aₓ-B_{y}-O,-SiR³₂-R⁴** **(III)**
dans laquelle
A est un groupe -[O-SiR⁵₂]- et B est un groupe -[O-SiR⁶R⁷]-,
R², R³, R⁵, et R⁶ indépendamment les uns des autres sont des groupes alkyle linéaires ou ramifiés comportant 1 à 4 atomes de carbone,
R¹, R⁴, et R⁷ indépendamment les uns des autres sont un groupe -L-R⁸,
dans lequel L = un groupe alkyle divalent linéaire ou ramifié et
R⁸ = H ou -Si(R⁹)_{z}(OR¹⁰)_{3-z} avec R⁹, R¹⁰ = un groupe alkyle linéaire ou ramifié comportant 1 à 4 atomes de carbone et z = 0, 1 ou 2, préférablement z = 0,
étant entendu, qu'au moins un des radicaux R¹ et R⁴ et/ou au moins un groupe B contient un groupe R⁸ =-Si(R⁹)_{z}(OR¹⁰)_{3-z},
x indépendamment représente un nombre entier de 1 à 20,
y indépendamment représente un nombre entier de 0 à 10,
préférablement x + y ≤ 20.

2. Agent de revêtement selon la revendication 1, **caractérisé en ce que** c'est un agent de revêtement à deux composants et le siloxane (D) à fonctionnalité alcoxysilyle est contenu dans le composant d'agent de revêtement, qui contient le composé (A).

3. Agent de revêtement selon l'une quelconque des revendications 1 et 2, **caractérisé en ce que** R², R³ et R⁵ indépendamment les uns des autres est un méthyle et/ou un éthyle, préférablement un méthyle,
R¹ et R⁴ indépendamment l'un de l'autre sont un groupe -L-R⁸, dans lequel L = un groupe alkyle divalent linéaire ou ramifié, préférablement éthylène, et R⁸ = -Si(R⁹)_{z}(OR¹⁰)_{3-z} avec R⁹, R¹⁰ = un groupe alkyle linéaire ou ramifié comportant 1 à 4 atomes de carbone et z = 0, 1 ou 2, préférablement z = 0,
et y = 0.

4. Agent de revêtement selon l'une quelconque des revendications 1 à 3, **caractérisé en ce qu'**aucuns composés contenant du fluor ne sont contenus, qui conduisent à une hydrophobisation du revêtement résultant de ceux-ci.

5. Agent de revêtement selon l'une quelconque des revendications 1 à 4, **caractérisé en ce qu'**en tant que composé (A) contenant des groupes polyhydroxyle, au moins une résine de poly(méth)acrylate est contenue, dotée d'un indice d'OH de 100 à 300 mg de KOH/g, préférablement de 150 à 200 mg de KOH/g, et d'une température de transition vitreuse de -35 à 100 °C, en particulier de -35 à 20 °C, (mesurée à l'aide de mesures de DSC selon la norme DIN-EN-ISO 11357-2).

6. Agent de revêtement selon l'une quelconque des revendications 1 à 5, **caractérisé en ce que** l'agent de revêtement contient au moins un catalyseur (C) contenant du phosphore et de l'azote.

7. Agent de revêtement selon l'une quelconque des revendications 1 à 6, **caractérisé en ce que** le composé (B) a été préparé de telle façon que des polyisocyanates et/ou leurs trimères de type isocyanurate et/ou leurs dimères de type allophanate et/ou leurs dimères de type biuret et/ou leurs dimères de type uretdione ont été mis à réagir avec au moins un composé de formule (Ia)
**H-NR-(X-SiR"ₓ(OR')₃₋ₓ)** **(Ia)**
et/ou avec au moins un composé de formule (IIa)
**HN(X-SiR"ₓ(OR')₃₋ₓ)ₙ(X'-SiR"_{y}(OR')_{3-y})ₘ** **(IIa),**
les substituants possédant la signification mentionnée dans la revendication 1.

8. Procédé pour la préparation de revêtements dans lequel un agent de revêtement selon l'une quelconque des revendications 1 à 7 est appliqué sur un substrat éventuellement pré-revêtu.

9. Procédé selon la revendication 8, **caractérisé en ce qu'**il est utilisé pour la préparation d'un revêtement, en particulier un revêtement de laque transparente, pour le laquage de véhicules automobiles en série, le laquage de pièces rapportées d'automobile et/ou de véhicules utilitaires et le laquage de réparation d'automobile.

10. Procédé selon l'une quelconque des revendications 8 et 9, **caractérisé en ce qu'**une laque de base pigmentée, et ensuite un agent de revêtement selon l'une quelconque des revendications 1 à 8, est appliqué(e) sur un substrat éventuellement prétraité et éventuellement pré-revêtu.

11. Procédé selon l'une quelconque des revendications 8 à 10, **caractérisé en ce qu'**après l'application de la couche de laque de base pigmentée, la laque de base appliquée est séchée d'abord à des températures de 20 à 80 °C, et est durcie, après l'application de l'agent de revêtement selon l'une quelconque des revendications 1 à 7, à des températures de 20 à 200 °C, préférablement de 60 à 150 °C, pendant un temps d'une minute à jusqu'à 10 heures.

12. Utilisation d'un agent de revêtement selon l'une quelconque des revendications 1 à 7 pour l'amélioration de la résistance aux souillures et des propriétés de nettoyage ou d'auto-nettoyage de revêtements, en particulier de revêtements de laque transparente.

13. Revêtement, pouvant être préparé d'après un procédé selon l'une quelconque des revendications 8 à 11.

14. Revêtement selon la revendication 13, **caractérisé en ce qu'**il possède une température de transition vitreuse (Tv) > 70 °C et une densité de réticulation > 3,0 x 10⁷ Pa.

15. Revêtement selon la revendication 13 ou 14, **caractérisé en ce qu'**il possède une résistance aux souillures de ΔL*₁₋₂ < 30, préférablement ΔL*₁₋₂ < 25, ΔL*₁₋₂ définissant la différence de la valeur de la luminosité colorimétrique L* avant (L*₁) et après souillure (L*₂) d'un panel d'échantillons, sur lequel un agent de revêtement selon l'une quelconque des revendications 1 à 7 a été appliqué et durci.

16. Revêtement multicouche à effet et/ou colorant comprenant au moins une couche de laque de base pigmentée et au moins une couche de laque transparente disposée sur celle-ci, **caractérisé en ce que** la couche de laque transparente a été préparée à partir d'un agent de revêtement selon l'une quelconque des revendications 1 à 7.
